# EUROPEAN PATENT SPECIFICATION

(11) **EP 4 454 328 B1**
(45) Date of publication and mention of the grant of the patent: **02.12.2026**
(21) Application number: 22850715.8
(22) Date of filing: 20.12.2022
(51) Int. Cl.: H04W 24/10, H04W 52/24, H04W 52/00, H04L 1/00, H04W 72/542, H04W 24/08

(54) **TECHNIQUE FOR DYNAMIC DOWNLINK TRANSMIT POWER SELECTION**
VERFAHREN ZUR DYNAMISCHEN DOWNLINK-SENDELEISTUNGSAUSWAHL
TECHNIQUE DE SÉLECTION DE PUISSANCE DE TRANSMISSION DE LIAISON DESCENDANTE DYNAMIQUE

(30) Priority: 22.12.2021 GR 20210100908; 22.12.2021 GR 20210100907; 06.07.2022 WO PCT/EP2022/068745; 02.08.2022 GR 20220100632
(43) Date of publication of application: 30.10.2024
(73) Proprietor: Telefonaktiebolaget LM Ericsson (publ), 164 83 Stockholm (SE)
(72) Inventor: ASTELY, David, 168 56 Bromma (SE); WERNER, Karl, 141 72 Segeltorp (SE); PITAROKOILIS, Antonios, 114 22 Stockholm (SE); APELFRÖJD, Rikke, 741 30 Knivsta (SE)
(74) Representative: Murgitroyd & Company
(86) International application number: PCT/EP2022/087019
(87) International publication number: WO 2023/118162

(56) References cited:
- WO-A1-2021/161220
- US-A1- 2019 281 487

## Description

### Technical Field

The present disclosure relates to a technique for dynamically (and/or semi-statically) selecting a downlink (DL) transmit power. In particular, the technique relates to selecting a DL transmit power level for transmitting data to at least one radio device in a cell of a radio access network (RAN), e.g., based on channel state information (CSI) reports related to reference signals (RSs) transmitted with different DL transmit power levels.

### Background

Radio devices, also referred to as user equipments (UEs), are served by a cell or a base station, also referred to as network node, according to the New Radio (NR) or Long Term Evolution (LTE) standards of the Third Generation Partnership Project (3GPP).

The patent application WO 2021/161220 A1 discloses systems and methods for Channel State Information (CSI) feedback for Non-Coherent Joint Transmission (NC-JT). The method disclosed therein is performed by a wireless communication device and comprises receiving a CSI report configuration that includes either a first group of Non-Zero Power CSI reference signal (NZP CSI-RS) resources for channel measurement and a second group of NZP CSI-RS resources for channel measurement or a list of NZP CSI-RS resource tuples each comprising one or more NZP CSI-RS resources for channel measurement. The method further comprises selecting NZP CSI-RS resources and reporting, to a network node, CSI based on the NZP CSI-RS resources.

The patent application US 2019/281487 A1 discloses a method of a UE, which performs a channel measurement (CM) on a first subset of a set of non-zero-power (NZP) CSI reference signal (CSI-RS) resources and an interference measurement (IM) on at least a second subset of the set of NZP CSI-RS resources. The second subset includes one or more NZP CSI-RS ports. The IM is performed according to the assumptions that each NZP CSI-RS port in the second subset corresponds to an interference transmission layer, the IM being in accordance with a set of energy per resource element ratios each associated with one NZP CSI-RS resource in the second subset, and that other interference not associated with the interference transmission layers is on the first and second subsets. The method includes generating a channel state information (CSI) report based on the CM and IM and transmitting the CSI report to a network.

There is a fundamental tradeoff between a (in particular DL) transmit power and the level of distortion. If the maximum average DL transmit power is chosen such that the distortions allow for high peak rates, at least for a radio device at a cell center and not limited by thermal noise or intercell interference, the choice of high peak rates leads to a requirement on a large enough peak-to-average-power-ratio (PAPR) which in turn leads to a requirement of a sufficiently low DL transmit power.

On the other hand, if a smaller PAPR is enforced, a higher DL transmit power can be used, which improves the coverage in terms of data rates that can be offered to a user (e.g., radio device) at a cell edge whose performance is limited by noise. The drawback is that distortions increase, limiting the achievable peak rates if the same PAPR threshold is applied uniformly to all users (e.g., radio devices) across the cell, in particular in the cell center as well as at the cell edge.

Theoretically, a modified strategy may be that the DL transmit power is reduced only for radio devices where the distortions limit their signal-to-interference-and-noise-ratio (SINR) and not intercell interference or thermal noise. Consequently, very high peak rates could be offered to users close to the center of the cell since they are served with lower DL transmit power which reduces the distortions. For cell edge users, where thermal noise or intercell interference are limiting the SINR, such a backoff is not needed since the distortions are not limiting the performance.

However, presently a practical strategy is lacking for identifying an appropriate DL transmit power level according to these theoretical considerations on user locations and associated potential channel qualities.

### Summary

Accordingly, there is a need for a technique that allows to dynamically (and/or semi-statically) select a downlink (DL) transmit power level, in particular in dependence of a channel quality reported by one or more radio devices. Alternatively or in addition, there is a need for a technique for enabling channel quality reporting suitable for dynamically (and/or semi-statically) selecting a DL transmit power level, e.g., individually for each radio device.

The scope and objectives of the present invention is defined in the appended independent claims. Specific embodiments of the present invention are defined in the dependent claims.

As to a method aspect, a method of selecting a downlink (DL) transmit power level from a plurality of DL transmit power levels for transmitting data to at least one radio device in a cell of a radio access network (RAN) is provided. The method comprises a step of transmitting a configuration message to the at least one radio device, the configuration message being indicative of at least one channel state information (CSI) measurement associated with at least one hypothesis. The at least one hypothesis comprises a DL transmit power level. The DL transmit power level is comprised in the plurality of DL transmit power levels. The method further comprises a step of transmitting at least one reference signal (RS), associated with the at least one hypothesis, on which the at least one radio device is configured to perform the CSI measurement according to the transmitted configuration message. The method further comprises a step of receiving, from the at least one radio device, at least one CSI report associated with at least one CSI measurement indicated in the configuration message. The method still further comprises a step of transmitting data to the at least one radio device, wherein a modulation configuration and a DL transmit power level are selected for the transmitting of the data based on the received at least one CSI report.

The DL transmit power level may refer to a power level (also denoted as transmit power or output power) used by a power amplifier (PA). Alternatively or in addition, each of the DL transmit power levels may be specified relative to a maximum DL transmit power level, e.g., of a PA, or relative to a previous DL transmit power level of a (e.g., control or data) transmission prior to the transmitting of the data. The relative specifying may comprise determining a backoff, e.g., in decibel (dB), compared to the maximum DL transmit power level or the previous DL transmit power level. Alternatively or in addition, the backoff may also be denoted as (in particular negative) transmit power offset (briefly: power offset) or backoff level.

The plurality of DL transmit power levels may be associated with a network node (also: radio network node), a distributed unit (DU), and/or a remote radio head (briefly: RRH; alternatively denoted as remote radio unit, briefly: RRU) serving the cell of the RAN. E.g., the network node, DU, and/or RRH may comprise, and/or may be connected to, at least one PA.

A number of (e.g., different) hypotheses, and/or a number of DL transmit power levels within the plurality of DL transmit power levels, and/or a power level for each of the DL transmit power levels within the plurality of DL transmit power levels, may be determined (e.g., quasi-) statically, semi-statically, and/or dynamically.

(Quasi-) statically may refer to not performing changes of the DL transmit power levels within an extended period of time, e.g., not changing the plurality of DL transmit power levels for several days, weeks, months or even a lifetime (or deployment, or uninterrupted usage) of the cell.

Semi-statically may refer to not performing changes of the DL transmit power levels for a predetermined number of transmission time intervals (TTIs), e.g., between ten and 100 TTIs, in particular 40 TTls. Alternatively or in addition, the TTI may comprise a (e.g., DL) slot (e.g., of a slot duration of 500 micro-seconds, 250 micro-seconds, or 125 micro-seconds according to LTE and/or NR standards).

Dynamically may refer to changes, e.g., on a per-need-basis and/or event triggered, and/or for a predetermined number of partitions of a TTI, e.g., between one-half TTI and two TTls, in particular one TTI. The event trigger and/or need may comprise, e.g., full DL buffer status with a large amount of data for transmission to a (in particular large) number of radio devices.

The plurality of DL transmit power levels may comprise a predetermined spacing of power levels in terms of the backoff. The lowest DL transmit power level among the plurality of DL transmit power levels may be determined based on a minimum requirement on (e.g., comprising a threshold value of) a channel quality. The channel quality may, e.g., be reported from the at least one radio device to the RAN (e.g., to a network node) as a channel quality indicator (CQI).

The channel quality may depend on a location of the at least one radio device. Alternatively or in addition, the channel quality may depend on a distortion power level. E.g., a radio device located at a cell center may experience a high signal-to-noise ratio (SNR), and/or a high signal-to-interference-and-noise ratio (SINR), whereby a distortion power level may be the main source of a degradation of the channel quality. As the distortion power level increases with the DL transmit power level, a low DL transmit power level may be suitable for data transmissions to the radio device located at the cell center. Alternatively or in addition, a radio device located at a cell edge may experience a low SNR, and/or a low SINR, whereby the distortion power level does not constitute the main source of the degradation of the channel quality. A high DL transmit power level may be suitable for data transmissions to the radio device located at the cell edge.

The configuration message may comprise at least one of the parameters *CSI-MeasConfig, CSI-ReportConfig, CSI-RS-ResourceMapping,* and *NZP-CSI-RS-Resource information elements,* e.g., according to the 3GPP document TS 38.331, version 17.0.0. The parameter *NZP-CSI-RS-Resource* may comprise a field *powerControlOffset,* e.g., for specifying a power offset of transmitting the at least one RS relative to transmitting data.

In some embodiments, each of the at least one hypothesis may comprise a combination of the modulation configuration and the DL transmit power level.

The modulation configuration may also be denoted as transport format. Alternatively or in addition, the modulation configuration may comprise a rank indicator (RI), a modulation and coding scheme (MCS) and/or a precoding matrix indicator (PMI).

The MCS may be chosen and signaled by the RAN (e.g., by one or more network nodes, in particular gNBs) to the at least one radio device (e.g., UE). Alternatively or in addition the CQI may be based on, or refer to, the channel quality that the at least one radio device (e.g., UE) reports.

The at least one RS may be transmitted using a beam direction, e.g., according to the modulation configuration of the at least one hypothesis.

The at least one RS may comprise a CSI-RS. Alternatively or in addition, the at least one RS may comprise a non-zero power (NZP) RS, e.g., a NZP-CSI-RS. Further alternatively or in addition, the at least one RS may comprise a zero power (ZP) RS, e.g., a ZP-CSI-RS.

The NZP-RS may be used to measure a channel from the network node transmitting the NZP-RS to the at least one radio device.

The configuration message may indicate to the at least one radio device to assume different DL transmit power levels for the (in particular NZP) RSs and the DL transmit power levels for the data transmitting according to the corresponding hypotheses, e.g., in the range of [-8, 15] dB, and/or with different DL transmit power levels separated by steps of at least one 1 dB. Alternatively or in addition, the DL transmit power level of a (in particular NZP) RS may comprise a (e.g., negative and/or positive) power offset relative to the DL transmit power level of the data transmitting within the same hypothesis.

The ZP-RS may correspond to, or may comprise, reserving at least one resource element (RE) for no transmissions. Alternatively or in addition, the ZP-RS may correspond to, or may comprise, muting the network node, e.g., in at least one RE. Alternatively or in addition, the ZP-RS, e.g., the ZP-CSI-RS, may be used for a CSI interference measurement (CSI-IM). The ZP-RS may also be denoted as CSI-IM resource.

The at least one CSI report may comprise a channel quality indicator (CQI), RI, and/or PMI associated at least one CSI measurement. Alternatively or in addition, the at least one CSI report may comprise a RS received power (RSRP) and/or a RS received quality (RSRQ).

The data transmitting may comprise transmitting data on a physical downlink shared channel (PDSCH). The data transmitting may further comprise transmitting demodulation reference signals (DMRSs) for demodulating, at the at least one radio device, the data transmitted on the PDSCH. The DMRS may differ from the at least one RS transmitted for the at least one CSI measurement.

At least the steps of transmitting the at least one RS and transmitting data to the at least one radio device may comprise radio transmitting (also denoted as wirelessly transmitting, and/or transmitting over the air) the at least one RS and/or the data.

The method steps may be performed by a network node serving the cell.

Alternatively or in addition, the method steps may be partly performed by a first network node and one or more second network nodes. The first network node may be an always-on network node. The first network node may also be denoted as coverage network node. The first network node may, e.g., serve a macro cell (e.g., permanently).

Alternatively or in addition, the at least one second network node may operate in an energy saving mode in case of low load of the cell and/or in case of a small number of radio devices served by the cell. Further alternatively or in addition, the at least one second network node may not, or need not, operate in the energy saving mode in case of high load of the cell and/or in case of a large number of radio devices served by the cell. The at least one second network node may also be denoted as capacity network node. Alternatively or in addition, the at least one second network node may, e.g., serve a micro cell and/or a pico cell (e.g., on a per-need-basis). The, e.g., micro, nano and/or pico, cell served by the at least one second network node may be comprised in the, e.g., macro, cell served by the first network node.

By selecting the hypothesis for the data transmitting (also denoted as data transmission) according to the one or more CSI reports, a combination of the modulation configuration and the DL transmit power level may be optimized. Alternatively or in addition, energy (also denoted as power consumption or energy consumption) may be saved, e.g., by applying a DL transmit power level with a backoff and/or a DL transmit power level below the maximum DL transmit power level. Further alternatively or in addition, a PA may be most power efficient when operating close to its saturation (in particular in or at a non-linear) region, e.g., at the maximum DL transmit power level, at the cost of large distortion. By operating at low transmit power and/or at a lower (e.g., than the maximum) DL transmit power level, e.g., within a linear region with the benefit of low distortion, the PA may be power inefficient, which may imply that a large part of the supplied energy is consumed on the PA as heat and not as transmit power for a signal (e.g., for the data transmitting). Still further alternatively or in addition, a throughput may be increased, e.g., by balancing a DL transmit power level and modulation configuration in dependence of the channel quality, in particular depending on distortions. Still further alternatively or in addition, by selecting the hypothesis for the data transmission according to the one or more CSI reports, a tradeoff between power (also: energy) efficiency of one or more PAs and a throughput may be optimized. E.g., by increasing the throughput, also the overall energy efficiency may be improved, for example by reducing a need for retransmissions.

Alternatively or in addition, based on the one or more CSI reports, the RAN (e.g., a network node) may determine to decrease and/or increase a distortion power level while improving a data rate and/or throughput.

Alternatively or in addition, by applying the method, a size and weight of the one or more network nodes serving the cell may be decreased.

The method aspect may comprise acquiring, e.g., at a network node, CSI, for adaptive (e.g., dynamic and/or semi-static) power setting (e.g., selecting a DL transmit power level). The adaptive power setting (and/or selecting of the DL transmit power level) may be applied at a radio frequency power amplifier, based on CSI reports from radio devices, in order to or take into account distortions. The CSI reports by the radio devices need not, or may not, contain too much distortions, as the CSI is used to determine the DL transmit power level (and/or backoff) for data transmissions. The distortions in the CSI and/or the DL transmit power level can impact (e.g., indirectly and/or directly) the distortions, e.g., of data transmissions. Controlling the DL transmit power level need not, or may not, need knowledge about the distortion power level (e.g., of a data transmission) as a function of distortions (e.g., in the CSI measurements, in particular the CSI-IMs). Alternatively or in addition, by the method, the RAN (e.g., embodied by one or more network nodes) and the at least one radio device (e.g., UE) may be assisted to decide on the best transmit power selection and/or an optimal choice of a DL transmit power level. Keeping the distortions at an appropriate level in each of the resource elements that are used for measurements may be important (and/or may be key) so that the corresponding CSI report is accurate.

The modulation configuration may comprise a rank indicator (RI), a modulation and coding scheme (MCS), and/or a precoding matrix indicator (PMI).

The modulation configuration may in particular comprise any combination of the RI, the MCS and the PMI.

The method may further comprise a step of selecting the at least one hypothesis from a set of hypotheses. The set of hypotheses may comprise at least two different hypotheses.

The set of hypotheses may comprise all possible combinations of modulation configurations and DL transmit power levels. Alternatively or in addition, the selection of the at least one hypothesis may comprise a (e.g., proper) subset of the set of hypotheses. E.g., for the at least one radio device located in a cell center, a low DL transmit power level and a high (and/or complicated) modulation configuration, e.g., in terms of a high MCS, may be suitable. Alternatively or in addition, for the at least one radio device located at a cell edge, a high DL transmit power level and a low (and/or simple) modulation configuration, e.g., in terms of a low MCS, may be suitable.

The method may further comprise a step of generating the set of hypotheses.

The set of hypotheses may be generated at deployment of the RAN, and/or at deployment or modification of any network node serving the cell.

Each hypothesis within the set of hypotheses may be associated with a distortion power level.

The distortion power level may be determined in dependence of the DL transmit power level, e.g., as an initial estimate and/or based on historical data and/or based on a non-linear response function of the PA. The historical data may be related to previous CSI measurements. Alternatively or in addition, the distortion power level may be determined in dependence of a number of multiple-input-multiple-output (MIMO) layers, and/or in dependence of a waveform (e.g., comprising discrete Fourier transform spread orthogonal frequency division multiplexing, DFTS-OFDM).

The set of hypotheses may be provided in a table. Optionally, the table may comprise the distortion power level.

The table may comprise a (e.g., first) set of columns indicative of power levels, e.g., a first column indicative of the DL transmit power level, and optionally a second column indicative of the distortion power level. Alternatively or in addition, for the hypotheses comprising modulation configurations, the table may comprise a second set of columns indicative of the modulation configuration, e.g., a third column indicative of the RI, a fourth column indicative of the MCS and a fifth column indicative of the PMI.

The at least one RS may comprises a non-zero-power (NZP) RS (briefly: NZP-RS, and/or optionally a CSI-RS), and/or a zero-power (ZP) RS (briefly: ZP-RS).

The NZP-RS may be transmitted with the DL transmit power level according to the at least one hypothesis, or with a DL transmit power level depending on the DL transmit power (e.g., designated for a data transmission) comprised in the at least one hypothesis.

E.g., according to 3GPP lingo, a transmit power (and/or a transmit power level) may be described as energy per resource element (EPRE). A resource element (RE) may be, or may correspond to, a subcarrier in an orthogonal frequency division multiplexing (OFDM) symbol. The EPRE may refer to power (e.g., on all antennas and/or ports) on the RE. As an illustrative simple example, it may be assumed that if the EPRE is one on all REs, transmitting may be performed with some nominal power of the radio and/or the power amplifier. In general for downlink, EPRE is not allowed to vary too much.

If, for example, a higher order modulation is used, the power on a given RE might vary simply because different modulation symbols have different power. For varying power across REs, the EPRE may refer to an average power. RSs (e.g., NZP-RSs, in particular NZP-CSI-RSs) may be transmitted with the same EPRE, or close to the same EPRE, as data. Since RSs conventionally only occupy a fraction of the REs, having the same (or clos to the same) EPRE as data may mean that more energy is spent on the data.

If the EPRE of a RS differs from the EPRE of data, the difference and/or deviation conventionally needs to be configured and/or signaled, e.g., within a configuration message, in particular the configuration message indicative of at least one CSI measurement associated with at least one hypothesis..

Transmissions, e.g., of RSs and/or of data, to different radio devices may be performed with different transmit power levels. Conventionally, different transmit power levels (and/or different total transmit powers) arise by, or are related to, assigning different amounts of REs to different radio devices. Alternatively or in addition, different transmit power levels (and/or different total transmit powers) may arise, or may be due to, varying the EPRE.

The ZP-RS may correspond to an empty RE and/or a RE kept free from any transmission, e.g., any RS transmission and/or any data transmission and/or any control transmission, in the cell. Alternatively or in addition, the ZP-RS may be reserved for the at least one radio device to perform CSI-IM. By the CSI-IM, the interference from neighboring cells and/or neighboring network nodes (which may also be denoted as inter-cell interference) may be measured. Alternatively or in addition, by the CSI-IM a noise and/or a distortion power level may be determined.

The transmissions of REs neighboring (e.g., in time and/or frequency) to the ZP-RS may be assumed, e.g., by the at least one radio device, to be transmitted with the DL transmit power level according to the at least one hypothesis (or at least with a DL transmit power level that depends on the DL transmit power level according to the at least one hypothesis). For example, energy measured in the RE of the ZP-RS may be indicative of an inter-cell interference, noise, and/or a distortion power level (e.g., caused by the non-linear response function of the PA) depending on the DL transmit power level.

The at least one hypothesis may comprise at least two hypotheses with different DL transmit power levels. Each hypothesis comprising a different DL transmit power level may be associated with a different NZP-RS.

Alternatively or in addition, the at least one hypothesis may comprise at least two hypotheses with different DL transmit power levels. Any one of the at least two hypotheses, or each hypothesis, may be associated with the same (also denoted as identical) time resources, the same frequency resources, and/or the same beam directions for the corresponding NZP-RSs.

The same NZP-RS may refer to the same physical resource, e.g., in terms of a resource element (RE). Alternatively or in addition, the same NZP-RS may refer to the same DL transmit power level used for the transmitting of the RS.

The ZP-RS may be identical for a subset, or all, of the at least one hypothesis.

The CSI-IM may be performed on the same one or more ZP-RSs, and/or the same one or more REs, for a subset or all hypotheses.

A number of CSI interference measurements (CSI-IM) comprised in the transmitted configuration messages may equal a number of the at least one hypothesis comprised in the transmitted configuration message.

The CSI-IM may be performed on the same, or different REs, for different hypotheses.

The step of transmitting the configuration message may, e.g., be performed when the at least one radio device connects to the cell. Alternatively or in addition, the step of transmitting the configuration message may, e.g., be performed when a configuration of the cell changes, e.g., upon maintenance or upgrade of a network node serving the cell.

The method may be performed by at least one network node serving the cell.

The at least one network node may serve the cell of the RAN.

In some embodiments, the RAN may comprise a first network node and at least one second network node. At least the step of transmitting the configuration message and/or receiving the at least one CSI report may be performed by the first network node. Alternatively or in addition, the steps of transmitting the at least one RS and transmitting data may be performed by the at least one second network node.

The first network node may be an always-on network node (also denoted as coverage network node). Alternatively or in addition, the at least one second network node (also denoted as capacity network node) may be switched on, e.g., by a control entity of the RAN and/or a control entity at the first network node, on a per need basis, e.g., if a large number or radio devices is connected to the cell. Alternatively or in addition, the at least one second network node may be in a power saving mode, e.g., for the transmitting of the at least one RS. Further alternatively or in addition, the at least one second network node may not, or need not, be in the power saving mode for the data transmitting.

The received at least one CSI report may comprise at least one RI, at least one PMI, and/or at least one channel quality indicator (CQI).

The transmitted configuration message, or a further configuration message, may be indicative of the at least one radio device being configured for periodic CSI reporting and/or for aperiodic CSI reporting.

The aperiodic CSI reporting may be triggered by data in a DL transmit buffer. Alternatively or in addition, the aperiodic CSI reporting may be triggered by a CQI being equal to, or exceeding, a predetermined threshold. Alternatively or in addition, the predetermined threshold may be referred to as a CQI cap, and any CQI exceeding the CQI cap may be considered as corresponding to the CQI cap, e.g., at least for selecting the modulation configuration.

The transmitted configuration message, or a further configuration message, may be indicative of reporting only on a subset of the at least one CSI measurement.

The CSI report may be indicative of one or more hypotheses with the highest potential data rates. Alternatively or in addition, the CSI report may be indicative of potential data rates exceeding a predetermined threshold.

The at least one radio device may be configured to report only on the CSI measurement associated with the hypothesis with the highest potential data rate. Alternatively or in addition, the at least one radio device may be configured to report on a subset of CSI measurements associated with the hypotheses with the highest potential data rates, e.g., in terms of a predetermined number of hypotheses and/or in terms of the predetermined threshold on the potential data rate.

In some embodiments, the CSI report may only take into account the at least one hypothesis for a CQI below a predetermined threshold. Alternatively or in addition, the CQI below the predetermined threshold may enable to use a lower DL transmit power level.

A (e.g., value of the) CQI below the predetermined threshold may refer to a value of the CI index, e.g., as listed in Tables 5.2.2.1-2 to 5.2.2.1-5 of the 3GPP document TS 38.214, version 17.1.0. Alternatively or in addition, the CQI may be associated to a modulation order (and/or a modulation scheme) according to the CQI index in Tables 5.2.2.1-2 to 5.2.2.1-5 of the 3GPP document TS 38.214, version 17.1.0. E.g., in one embodiment, according to Table 5.2.2.1-2 of the 3GPP document TS 38.214, version 17.1.0, a CQI index between 1 and 6 may correspond to quadrature phase shift keying (QPSK, alternatively also denoted as 4-QAM with QAM short for quadrature amplitude modulation), a CQI index between 7 and 9 may correspond to 16-QAM, and/or a CQI index of at least 10 may correspond to 64-QAM, or an even higher modulation order.

A low QCI may conventionally mean that a high transmit power, and/or a DL high transmit power level, may be used, e.g., as the at least one radio device (e.g., UE) experiences a low SNR and/or SINR (and/or a low signal-to-distortion-and-noise ratio, SDNR, and/or a low signal-to-distortion-interference-and-noise ratio, SDINR). Alternatively or in addition, a low CQI may be associated with a robust modulation order (and/or modulation scheme).

For the data transmitting, the hypothesis with the highest expected throughput may be applied.

The highest expected throughput may be determined based on a CQI and/or a RI comprised in the received at least one CSI report.

The step of data transmitting to the at least one radio device may comprise transmitting data (e.g., simultaneously) to at least two radio devices using the same DL transmit power level. Optionally, the step of data transmitting may further comprise data to the at least two radio devices using the same modulation configuration.

The transmitted configuration message, or a further configuration message, may be indicative of a scheduling of the at least one RS.

The transmitted configuration message may be indicative of, or may comprise, a periodicity of transmitting the at least one RS, an offset of transmitting the at least one RS within a period, a frequency of the transmitted at least one RS, and/or an exact RS configuration.

The exact RS configuration may comprise a RE used for the transmitting of the at least one RS. Alternatively or in addition, the exact RS configuration may comprise an indication of the DL transmit power level of at least one NZP-RS and/or an indication of at least one ZP-RS.

The steps of transmitting the configuration message, transmitting the at least one RS, and/or receiving the at least one CSI report may be repeatedly performed before the step of transmitting data. E.g., a first received CSI report may be indicative of a CQI exceeding a predetermined threshold (also denoted as the CQI being above the QCI cap). The CQI exceeding the predetermined threshold may correspond to the at least one radio device having assumed a wrong (e.g., a too low) distortion power level, e.g., when performing the CSI-IM.

The at least one, or any, radio device (e.g., UE) may conventionally measure a noise level (and/or, e.g., second order statistics of the noise) on the ZP-RS and/or on CSI-IM resource and/or perform a channel estimate based on one or more NZP-RSs (e.g., NZP-CSI-RSs). The measuring of the noise level and/or performing the channel estimate may collectively be referred to as performing the CSI measurement. By the CSI measurement, the at least one, or any, radio device (e.g., UE) may determine a SNR and/or SINR (and/or SDNR and/or SIDNR), that can be used to derive the CSI. The at least one, or any, radio device (e.g., UE) may not be able to distinguish (also denoted as cannot tell the difference) between noise, interference, and/or distortion.

The RAN (e.g., embodied by one or more network nodes, e.g., gNBs) may determine (also: decide) which CSI measurement (e.g., which CSI-IM, and/or which ZP-RSs and/or NZP-RSs) belongs to which output power hypothesis and act accordingly. When the RAN (e.g., a network node, in particular a gNB) receives a CSI report, it may know which CSI measurement (e.g., CSI-IM, and/or which ZP-RSs and/or NZP-RSs) was used to derive the CSI report and, e.g., implicitly, derive the transmit power level assumptions.

The technique may be implemented in accordance with a 3GPP specification, e.g., for 3GPP release 17. The technique may be implemented for 3GPP LTE or 3GPP NR according to a modification of the 3GPP document TS 38.214, version 17.1.0, a modification of the 3GPP document TS 38.211, version 17.2.0 (e.g., in view of CSI-RS on the physical level), and/or a modification of the 3GPP document TS 38.331, version 17.0.0.

Any radio device (which may also be denoted as terminal) may be a user equipment (UE), e.g., according to a 3GPP specification.

The at least one radio device (shortly hereinafter also: the radio device) and the RAN may be wirelessly connected in a downlink (DL) and/or an uplink (UL) through a Uu interface.

The at least one radio device and/or the RAN may form, or may be part of, a radio network, e.g., according to the Third Generation Partnership Project (3GPP) or according to the standard family IEEE 802.11 (Wi-Fi). The method aspect may be performed by one or more embodiments of the RAN (e.g., a base station, also denoted as network node).

The RAN may comprise one or more base stations, e.g., performing the method aspect.

Any of the radio devices may be a 3GPP user equipment (UE) or a Wi-Fi station (STA). The radio device may be a mobile or portable station, a device for machine-type communication (MTC), a device for narrowband Internet of Things (NB-loT) or a combination thereof. Examples for the UE and the mobile station include a mobile phone, a tablet computer and a self-driving vehicle. Examples for the portable station include a laptop computer and a television set. Examples for the MTC device or the NB-loT device include robots, sensors and/or actuators, e.g., in manufacturing, automotive communication and home automation. The MTC device or the NB-loT device may be implemented in a manufacturing plant, household appliances and consumer electronics.

Whenever referring to the RAN, the RAN may be implemented by one or more base stations.

The base station may encompass any station that is configured to provide radio access to any of the radio devices. The base stations may also be referred to as network node, cell, transmission and reception point (TRP), radio access node or access point (AP). The base station may provide a data link to a host computer providing the user data to the at least one radio device or gathering user data from the at least one radio device. Examples for the base stations may include a 3G base station or Node B, 4G base station or eNodeB, a 5G base station or gNodeB, a Wi-Fi AP and a network controller (e.g., according to Bluetooth, ZigBee or Z-Wave).

The RAN may be implemented according to the Global System for Mobile Communications (GSM), the Universal Mobile Telecommunications System (UMTS), 3GPP Long Term Evolution (LTE) and/or 3GPP New Radio (NR).

Any aspect of the technique may be implemented on a Physical Layer (PHY), a Medium Access Control (MAC) layer, a Radio Link Control (RLC) layer, a packet data convergence protocol (PDCP) layer, and/or a Radio Resource Control (RRC) layer of a protocol stack for the radio communication.

Herein, referring to a protocol of a layer may also refer to the corresponding layer in the protocol stack. *Vice versa,* referring to a layer of the protocol stack may also refer to the corresponding protocol of the layer. Any protocol may be implemented by a corresponding method.

As to another aspect, a computer program product is provided. The computer program product comprises program code portions for performing any one of the steps of the method aspect disclosed herein when the computer program product is executed by one or more computing devices. The computer program product may be stored on a computer-readable recording medium. The computer program product may also be provided for download, e.g., via the radio network, the RAN, the Internet and/or the host computer. Alternatively, or in addition, the method may be encoded in a Field-Programmable Gate Array (FPGA) and/or an Application-Specific Integrated Circuit (ASIC), or the functionality may be provided for download by means of a hardware description language.

As to a first device aspect, a device (e.g., a network node) for selecting a DL transmit power level from a plurality of DL transmit power levels for transmitting data to at least one radio device in a cell of a RAN is provided.

The device (e.g., the network node) may be configured to perform any one of the steps, or comprise any one of the features, of the method aspect.

As to a further first device aspect, a device (e.g., a network node) for selecting a DL transmit power level from a plurality of DL transmit power levels for transmitting data to at least one radio device in a cell of a RAN is provided. The device (e.g., the network node) comprises processing circuitry (e.g., at least one processor and a memory). Said memory comprises instructions executable by said at least one processor whereby the device (e.g., the network node) is operative to perform any one of the steps, or comprise any one of the features, of the method aspect.

As to a still further aspect a communication system including a host computer is provided. The host computer comprises a processing circuitry configured to provide user data, e.g., included in the data of the data transmission. The host computer further comprises a communication interface configured to forward the (e.g., user) data to a cellular network (e.g., the RAN and/or the base station) for transmission to a user equipment (UE). The cellular network comprises at least one base station configured to communicate with the UE (e.g., as the at least one radio device). A processing circuitry of the cellular network (e.g., of the at least one base station) is configured to execute any one of the steps of the method aspect.

The communication system may further include the UE.

The processing circuitry of the host computer may be configured to execute a host application, thereby providing the (e.g., user) data and/or any host computer functionality described herein. Alternatively, or in addition, the processing circuitry of the UE may be configured to execute a client application associated with the host application.

Any one of the devices, the base station, the communication system or any node or station for embodying the technique may further include any feature disclosed in the context of the method aspect, and *vice versa.* Particularly, any one of the units and modules disclosed herein may be configured to perform or initiate one or more of the steps of the method aspect.

### Brief Description of the Drawings

Further details of embodiments of the technique are described with reference to the enclosed drawings, wherein:
- Fig. 1: shows a schematic block diagram of an embodiment of a device for of selecting a downlink (DL) transmit power level from a plurality of DL transmit power levels for transmitting data to at least one radio device in a cell of a radio access network (RAN);
- Fig. 2: shows a flowchart for a method of selecting a DL transmit power level from a plurality of DL transmit power levels for transmitting data to at least one radio device in a cell of a RAN, which method may be implementable by the device of Fig. 1;
- Fig. 3: shows a schematic dependence of an output power of a power amplifier (PA) on an input power of the PA;
- Fig. 4: shows a schematic dependence of an instantaneous output power distribution of a PA on the input power of the PA for different values of peak-to-average-power-ratios (PAPRs) of the input signal;
- Fig. 5: schematically illustrates a dependency of distortions, represented by an error vector magnitude (EVM), on a DL transmit power level, represented as a power backoff relative to a reference DL transmit power level;
- Fig. 6: schematically illustrates a throughput in dependence of the signal-to-noise-ratio (SNR) experienced by a radio device for different DL transmit power levels as well as combined optimal throughput when dynamically selecting the DL transmit power level in dependence of the SNR according to the method of Fig. 2;
- Fig. 7: shows and exemplary embodiment of the method for selecting the DL transmit power level of Fig. 2, which may be implementable by the device of Fig. 1;
- Fig. 8: schematically illustrates compensating a reported channel quality indicator (CQI) with a CQI cap for obtaining an effective CQI for DL transmit power selection;
- Fig. 9: shows a schematic block diagram of a network node embodying the device of Fig. 1;
- Fig. 10: schematically illustrates an example telecommunication network connected via an intermediate network to a host computer;
- Fig. 11: shows a generalized block diagram of a host computer communicating via a base station with a user equipment over a partially wireless connection; and
- Figs. 12: and 13 show flowcharts for methods implemented in a communication system including a host computer, a base station and a user equipment.

### Detailed Description

In the following description, for purposes of explanation and not limitation, specific details are set forth, such as a specific network environment in order to provide a thorough understanding of the technique disclosed herein. It will be apparent to one skilled in the art that the technique may be practiced in other embodiments that depart from these specific details (e.g., by combining different embodiments disclosed herein, whenever the teachings of the embodiments are combinable in a meaningful way). Moreover, while the following embodiments are primarily described for a New Radio (NR) or 5G implementation, it is readily apparent that the technique described herein may also be implemented for any other radio communication technique, including a Wireless Local Area Network (WLAN) implementation according to the standard family IEEE 802.11, 3GPP LTE (e.g., LTE-Advanced or a related radio access technique such as MulteFire), for Bluetooth according to the Bluetooth Special Interest Group (SIG), particularly Bluetooth Low Energy, Bluetooth Mesh Networking and Bluetooth broadcasting, for Z-Wave according to the Z-Wave Alliance or for ZigBee based on IEEE 802.15.4.

Moreover, those skilled in the art will appreciate that the functions, steps, units and modules explained herein may be implemented using software functioning in conjunction with a programmed microprocessor, an Application Specific Integrated Circuit (ASIC), a Field Programmable Gate Array (FPGA), a Digital Signal Processor (DSP) or a general purpose computer, e.g., including an Advanced RISC Machine (ARM). It will also be appreciated that, while the following embodiments are primarily described in context with methods and devices, the invention may also be embodied in a computer program product as well as in a system comprising at least one computer processor and memory coupled to the at least one processor, wherein the memory is encoded with one or more programs that may perform the functions and steps or implement the units and modules disclosed herein.

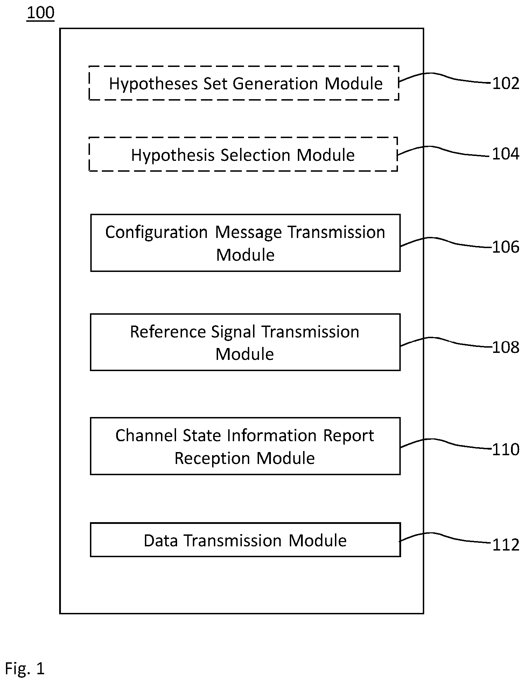

Fig. 1 schematically illustrates a block diagram of an embodiment of a device for selecting a downlink (DL) transmit power level from a plurality of DL transmit power levels for transmitting data to at least one radio device in a cell of a radio access network (RAN). The device is generically referred to by reference sign 100.

The device 100 comprises a configuration message transmission module 106 that is configured for transmitting a configuration message to the at least one radio device. The configuration message is indicative of at least one channel state information (CSI) measurement associated with at least one hypothesis. The at least one hypothesis comprises a DL transmit power level. The DL transmit power level is comprised in the plurality of DL transmit power levels.

The device 100 further comprises a reference signal (RS) transmission module 108 that is configured for transmitting at least one RS, associated with the at least one hypothesis, on which the at least one radio device is configured to perform the CSI measurement according to the transmitted configuration message. E.g., the at least one RS may comprise a non-zero-power RS (NZP-RS), in particular a NZP-CSI-RS (briefly also: CSI-RS), that is transmitted with the DL transmit power level comprised in the at least one hypothesis (or a DL transmit power level depending on the DL transmit power level, e.g., designated for a data transmission, comprised in the hypothesis). Alternatively or in addition, the at least one RS may comprise a zero-power RS (ZP-RS) for CSI interference measurement (CSI-IM), and the at least one hypothesis may comprise its location in a time-frequency grid (and/or a resource element, RE) as well as the DL transmit power level of neighboring locations in the time-frequency grid (e.g., neighboring REs). The ZP-RS may also be denoted as CSI-IM resource.

The device 100 further comprises a channel state information (CSI) report reception module 110 that is configured for receiving, from the at least one radio device, at least one CSI report associated with at least one CSI measurement indicated in the configuration message.

The device 100 still further comprises a data transmission module 112 that is configured for transmitting data to the at least one radio device. A modulation configuration and a DL transmit power level are selected for the transmitting of the data based on the received at least one CSI report.

Optionally, the device 100 comprises a hypothesis selection module 104 that is configured for selecting the at least one hypothesis from a set of hypotheses. The set of hypotheses may comprise at least two different hypotheses.

Further optionally, the device 100 comprises a hypotheses set generation module 102 that is configured for generating the set of hypotheses.

Still further optionally, the device 100 may comprise a further configuration message transmission module (not shown) that is configured for transmitting a further configuration message that is indicative of reporting only on a subset of the at least one CSI measurement. Alternatively or in addition, the same or a still further configuration message transmission module (not shown) is configured for transmitting a still further configuration message that is indicative of a scheduling of the at least one RS.

Alternatively or in addition, the configuration message transmission module 106 may be further configured for transmitting the further configuration message indicative of reporting only on a subset of the at least one CSI measurement and/or the still further configuration message indicative of a scheduling of the at least one RS. Further alternatively or in addition, any one of the configuration messages may be combined into one configuration message, e.g., indicative of at least one CSI measurement associated with at least one hypothesis, indicative of reporting only a subset of the at least one CSI measurement and/or indicative of scheduling of the at least one RS.

Any of the modules of the device 100 may be implemented by units configured to provide the corresponding functionality.

The device 100 may also be referred to as, or may be embodied by, a network node. The network node 100 and the at least one radio device may be in direct radio communication, e.g., at least for the transmitting of the configuration message, the at least one RS and/or the data, and/or the receiving of the at least one CSI report.

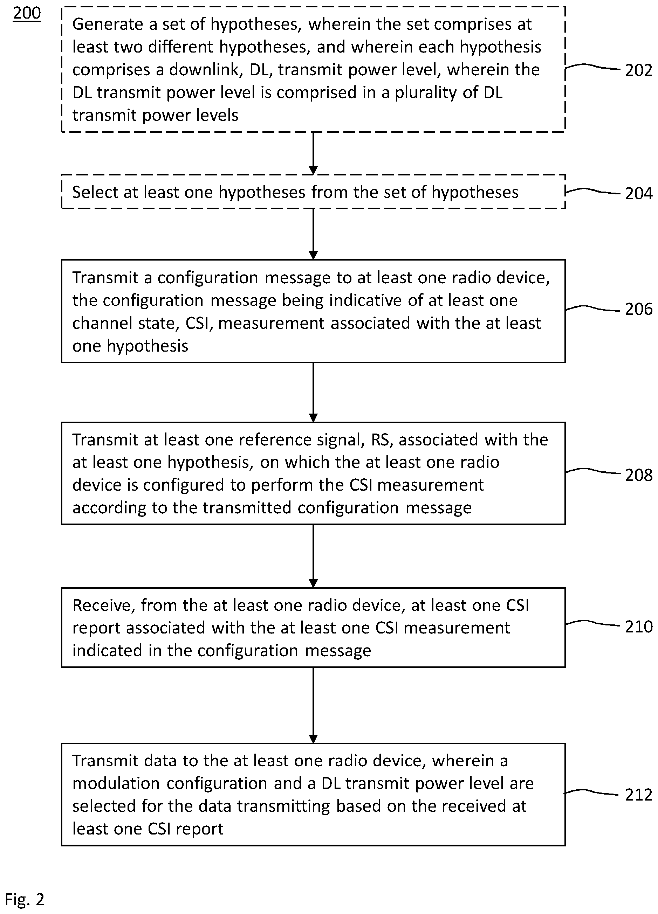

Fig. 2 shows an example flowchart for a method 200 of selecting a DL transmit power level from a plurality of DL transmit power levels for transmitting data to at least one radio device in a cell of a RAN.

In a step 206, a configuration message is transmitted to the at least one radio device. The configuration message is indicative of at least one CSI measurement associated with at least one hypothesis. The at least one hypothesis comprises a DL transmit power level. The DL transmit power level is comprised in the plurality of DL transmit power levels.

In a step 208, at least one RS, associated with the at least one hypothesis, is transmitted, on which the at least one radio device is configured to perform the CSI measurement according to the transmitted 206 configuration message. E.g., the at least one RS may comprise a NZP-RS, in particular a CSI-RS, for example transmitted with the DL transmit power level comprised in the hypothesis (or a DL transmit power level depending on the DL transmit power level, e.g., designated for a data transmission, comprised in the hypothesis). Alternatively or in addition, the at least one RS may comprise a ZP-RS for CSI-IM, and the hypothesis may comprise a location in the time-frequency grid, e.g., a RE, of the ZP-RS and/or a DL transmit power level of neighboring locations, e.g., REs. The ZP-RS may also be denoted as CSI-IM resource.

In a step 210, from the at least one radio device, at least one CSI report associated with at least one CSI measurement indicated in the configuration message is received.

In a step 212, data are transmitted to the at least one radio device. A modulation configuration and a DL transmit power level are selected for the transmitting 212 of the data based on the received 210 at least one CSI report.

Optionally, in a step 204, the at least one hypothesis is selected from a set of hypotheses. The set of hypotheses may comprise at least two different hypotheses.

Further optionally, in a step 202 the set of hypotheses is generated.

In a further optional step 209 (not shown in Fig. 2), a further configuration message, that is indicative of reporting only on a subset of the at least one CSI measurement, is transmitted. Alternatively or in addition, the further configuration message is indicative of a scheduling of the at least one RS. Further alternatively or in addition, in two different optional steps a further configuration message, that is indicative of reporting only a subset of the at least one CSI measurement, is transmitted and/or a still further configuration message, that is indicative of a scheduling of the at least one RS, is transmitted.

Further alternatively or in addition, the configuration message transmitted in the step 206 may be further indicative of a scheduling of the at least one RS and/or of reporting only a subset of the at least one CSI measurement.

The method 200 may be performed by the device 100. For example, the modules 106, 108, 110 and 112 may perform the steps 206, 208, 210 and 212, respectively. Alternatively or in addition, the optional modules 102 and 104 may perform the steps 202 and 204, respectively.

The technique may be applied to downlink (DL) communications between the RAN (e.g., comprising at least one network node) and one or more radio devices.

The device 100 may be a network node (also denoted as base station) in radio connection with the at least one radio device. Herein, any radio device may be a mobile or portable station and/or any radio device wirelessly connectable to a base station or RAN, or to another radio device. For example, the radio device may be a user equipment (UE), a device for machine-type communication (MTC) or a device for (e.g., narrowband) Internet of Things (IoT). Two or more radio devices may be configured to wirelessly connect to each other, e.g., in an *ad hoc* radio network or via a 3GPP SL connection. Furthermore, any base station may be a station providing radio access, may be part of a radio access network (RAN) and/or may be a node connected to the RAN for controlling the radio access. For example, the base station may be an access point, for example a Wi-Fi access point.

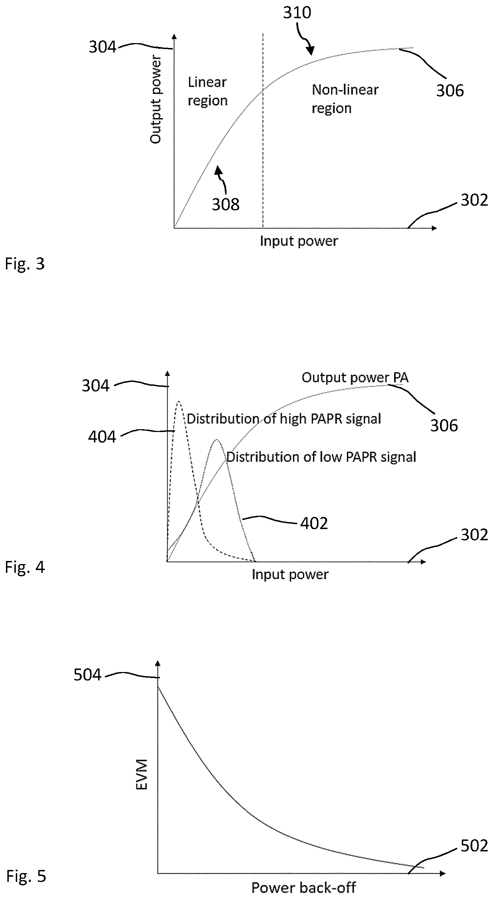

For any embodiment, the radio frequency power amplifier (PA) is a key component in any radio network node (briefly also: network node), and its requirements have a large impact on the power consumption, size, and weight of the entire radio network node (also denoted as base station, BS) in a RAN. To understand some of the fundamental tradeoffs, e.g., consider the input power 302 to output power (also denoted as, in particular DL, transmit power) 304 characteristics 310 of a power amplifier as schematically displayed in Fig. 3. The input power 302 to output power 304 characteristics 310 can be divided into two regions, a linear region 308, where the output power 304 is approximately proportional to the input power 302, and a non-linear region 306, where the output power 304 saturates.

Ideally, the input signal 302 should be scaled to ensure that the power amplifier is operating in its linear region 308 to ensure as little in-and out-of-band distortion of the (e.g., output) signal (e.g., at reference sign 304) as possible. Typically, the (e.g., input) signal (e.g., at reference sign 302) is scaled such that the peak of the input signal 302 is within the linear region 308 with very high probability, (e.g., a probability of about 99.999%), as, e.g., shown for two exemplary instantaneous power distributions with different peak-to-average-power-ratio (PAPR) in Fig. 4.

For input signals 302 with high PAPR (as schematically illustrated at reference sign 404 in Fig. 4), the average output power 304 will be significantly lower than for signals with low PAPR (as schematically illustrated at reference sign 402 in Fig. 4). In addition, the power amplifier efficiency increases close to the non-linear region 306. Thus, for signals with a high PAPR (e.g., as depicted at reference sign 404), the power amplifier will be less efficient as a large portion of the (e.g., input and/or output) signal (e.g., at reference sign 302 and/or 304) will be low in power, as schematically illustrated in Fig. 4.

For 4G and 5G systems based on LTE and NR, conventionally orthogonal frequency division multiplexing (OFDM) is used. Data is transmitted in parallel on many subcarriers of an OFDM symbol. In practice, this is implemented taking OFDM symbols (in the frequency domain) and generating a time domain sequence through an inverse fast Fourier transform (IFFT). A conventional advantage of OFDM waveforms is the inherent robustness to multipath propagation, but a conventional disadvantage is a relatively high PAPR.

As conventionally the PAPR of OFDM signals (and/or transmitted OFDM symbols) is relatively high, in practical implementations, a so-called crest factor reduction (CFR) is used to reduce the peaks of the input (e.g., the input shown at reference sign 302 in Figs. 3 and 4). By reducing the peaks, the average transmitted power of the signal (e.g., the output power shown at reference sign 304 in Figs. 3 and 4) can be increased, and thus the received signal-to-noise-ratio (SNR) will be higher as well. Alternatively or in addition, efficiency (e.g., of the PA and/or the network node, and/or in terms of energy consumption, also denoted as power consumption) is improved.

Herein, whenever referring to noise or a signal-to-noise ratio (SNR), a corresponding step, feature or effect is also disclosed for noise and/or interference, or a signal-to-interference-and-noise ratio (SINR). Alternatively or in addition, a corresponding step, feature or effect may also disclosed for distortion, a signal-to-distortion-and-noise ratio (SDNR) and/or a signal-to-distortion-interference-and-noise ratio (SDINR).

Conventional basic techniques for CFR include iterative peak-clipping and filtering (also denoted as clip-and-filter) and peak cancellation, with an abundance of other more sophisticated existing methods for CFR. CFR does, however, also cause signal distortions, and there is a trade-off between the distortion created by the CFR and the efficiency of the power amplifier. When a high level of distortion can be tolerated, the signal power distribution can be brought closer to the region where the amplifier is most power efficient (e.g., close to, or at, a transition from the linear region 308 to the non-linear region 310).

E.g., assume that CFR is used to limit the signal peak power to a certain fixed peak value that the power amplifier can handle and that this value does not depend on the input signal power (e.g., the input power at reference sign 302 in Figs. 3 and 4) to the CFR. The level of distortions can be controlled by controlling the average (e.g., DL) transmit power of the input signal (e.g., the signal at reference sign 302 in Figs. 3 and 4; and/or the output power 304 before the peak reduction) to the CFR. If the input power (e.g., as shown at reference sign 302 in Figs. 3 and 4) is reduced (also referred to as power backoff), the output power (e.g., as shown at reference sign 304 in Figs. 3 and 4) is reduced. Alternatively or in addition, the PAPR is effectively increased (e.g., as shown at reference sign 404 in Fig. 4) in the output signal power (e.g., as shown at reference sign 304 in Figs. 3 and 4) which in turn means that less distortions are generated.

Distortions are commonly quantified in terms of an error vector magnitude (EVM) in percent. In Fig. 5, the EVM of the distortions (e.g., per antenna) at reference sign 504 is schematically shown to vary with the (input) signal power backoff at reference sign 502. Even though there also are other imperfections in the radio signal path, such as phase noise, the CFR is often the dominating source of the distortions. Thus, the EVM can be reduced by reducing the (e.g., DL) transmit power.

The basic resource unit in 4G and 5G systems using OFDM is one subcarrier in one OFDM symbol, and this is referred to as resource element (RE). In NR, a set of resource elements (REs) over twelve adjacent subcarriers is referred to as physical resource block (PRB), and fourteen adjacent OFDM symbols constitute a slot (and/or a transmission time interval, TTI). A duration of a slot (and/or TTI) may be 1 millisecond (ms) in LTE and, e.g., as short as 0.0625 ms in NR depending on the cyclic prefix (CP) and numerology (e.g., for normal CP and numerology 4).

Dynamic (and/or adaptive, and/or semi-static) scheduling and link adaptation may be used to take instantaneous traffic demands and channel conditions into account with an update rate equal to the slot rate (e.g., less or equal to 1 ms). E.g., a radio device (e.g., user) with high SINR may use several multiple-input-multiple-output (MIMO) layers and MCSs with high modulation orders (e.g., up to 256-QAM) and high code rates (e.g., up to 0.95). Alternatively or in addition, a radio device (e.g., user) at low SINR may use, e.g., a single layer with an MCS with low order (e.g., QPSK) and low code rate (e.g., 0.1).

Sources of interference include, e.g., DL transmissions by neighboring network nodes (also denoted as base stations; so-called intercell interference) or even from the serving network node (also: base station) in the case of MU-MIMO (so-called intracell interference). Alternatively or in addition, distortions introduced by CFR contribute to the interference, as do other non-linearities in the serving network node (also: base station) transmitter.

To be able to provide (also: offer), e.g., very, high peak data rates (e.g., at least in the cell center and/or at low network load when there is little intercell interference), the maximum peak power may be chosen so that the distortions are adequately low, e.g., around 3.5 % (e.g., of a signal received at a radio device), for corresponding maximum *average* power. This in turn may drive a requirement for a relatively high PAPR, e.g., around 7.5 decibel (dB).

A scheduling and/or link adaptation functionality generally needs to have knowledge about the channel condition. Such knowledge is referred to, e.g., as channel state information (CSI), and the terminals may determine CSI by performing measurements on so-called CSI reference signals (CSI-RS) which are transmitted in the DL. The CSI-RS resources are conventionally multiplexed on the time-frequency grid with other transmissions such as data transmissions on the physical downlink shared channel (PDSCH) and its associated demodulation reference signals (DMRSs).

There are conventionally different types of CSI-RS. The nonzero-power CSI-RS (NZP-CSI-RS) are conventionally used to measure the channel. The network node (e.g., gNB) will transmit RSs, e.g., a sequence of symbols known by both transmitter (e.g., the network node) and receiver (e.g., the at least one radio device) that has not been altered by the transmitter (e.g., the network node) through, e.g., a precoding filter.

A second set of CSI-RS resources are so-called zero power CSI-RS (ZP-CSI-RS), which are briefly also denoted as CSI-IM resources (e.g., due to the use of the ZP-CSI-RS for CSI-IM). A CSI-IM resource is associated with a set of resource elements (REs): e.g., either four adjacent resource elements in each PRB over the bandwidth within one OFDM symbol, or two adjacent subcarriers within two adjacent OFDM symbols (2x2). These REs are used primarily to measure interference. The serving network node (e.g., gNB) typically sends nothing, e.g., the subcarriers are blanked. This is realized by configuring the zero power CSI-RS (ZP-CSI-RS), indicating to the at least one radio device (e.g., terminal) that PDSCH is not mapped to those resource elements. Typically, network nodes (e.g., gNBs) serving neighboring cells use the resource elements in a way that corresponds to normal activity (e.g., for transmitting data) thereby allowing a radio device (e.g., terminal) to measure a reliable estimate of the interference from other cells (e.g., intercell interference).

Using the channel and interference estimates obtained from the NZP-RS (e.g., NZP-CSI-RS) and the ZP-RS (e.g., ZP-CSI- RS) and/or the associated CSI-IM, respectively, the radio device (e.g., terminal) can determine CSI feedback that is reported back (e.g., as one or more CSI reports) to the network node (e.g., gNb) which may use it for scheduling and link adaptation. Such a CSI report may contain one or more of the following: a rank indicator (RI), a precoding matrix indicator (PMI), and channel quality indicator (CQI). The CQI can be viewed as a quantization of the SINR (and/or the SNR, SDNR, and/or SDINR) that is obtained conditioned on the reported number of layers as indicated by the RI and the precoding weights as indicated by the PMI.

In NR, there is a possibility to configure reserved resources in the downlink. These are conventionally configured on a semi-static time scale where the reserved resources can be indicated, e.g., by using two bitmaps where one bitmap indicates the OFDM symbols used for the reserved resources, and the other bitmap indicates which PRBs in frequency are to be used for the reserved resources. The network node (e.g., gNB) can then adaptively, in particular dynamically (e.g., slot based) or semi-statically (e.g., every fourty, 40, slots), control which of the reserved resources should be used for downlink data (PDSCH) and/or DMRSs, and which should remain reserved, e.g., free from PDSCH transmissions (e.g., free from data and DMRS transmissions).

There is a fundamental tradeoff between high, e.g., DL, transmit power (also: output power) and low distortion. If the maximum average power is chosen so that the distortions allow high peak rates, at least for cell center radio devices (e.g., terminals) not limited by thermal noise or intercell interference, this conventionally leads to a requirement on a large enough PAPR which in turn leads to a requirement of a sufficiently low, e.g., DL, transmit power (also: output power), and/or to a sufficiently large backoff.

Alternatively or in addition, if a smaller PAPR is enforced, a higher, e.g., DL, transmit power (also: output power) can be used which improves the coverage in terms of data rates that can be offered to radio devices (e.g., users) at the cell edge whose performance is limited by noise. The conventional drawback is that distortions increase, and this in turn limits the achievable peak rates if the same PAPR threshold is applied uniformly to (e.g., all) the radio devices (e.g., the users) across the cell.

An alternative strategy comprises that the power is reduced only for radio devices (e.g. terminals), for which the distortions limit their SINR (and/or SNR, SDNR, and/or SDINR), and not intercell interference or thermal noise. Consequently, very high peak rates may be offered to radio devices (e.g., users) close to the center of the cell since they are served with lower, e.g., DL, transmit power (also: output power), which reduces the distortions. For cell edge radio devices (e.g., users), where thermal noise or intercell interference are limiting the SINR (and/or SNR, SDNR, and/or SDINR), such a backoff is not needed since the distortions are not limiting the performance.

According to an embodiment, the distortion that is transmitted within the one or more ZP-RSs (also denoted as CSI-IM resources, and/or that are used for interference and noise measurement at the at least one radio device, e.g., user) may be controlled either by injecting (e.g., artificially generating) additional noise in the resources or by scheduling other resources within the (e.g., orthogonal frequency division multiplexing, OFDM) symbols that contain the one or more ZP-RSs (and/or CSI-IM resources) such that the distortions leaking into these will reflect the distortion associated with a specific backoff.

Provided that the distortions on the one or more ZP-RSs (and/or CSI-IM resources) can be adjusted such that the distortions that the radio device measures are those associated with specific backoffs, according to an embodiment, only one CSI report may be configured (and/or chosen). The one CSI report may be based on a CSI measurement (e.g., comprising, or consisting of, an interference measurement based on a CSI-IM resource, e.g., by means of a ZP-RS, in particular a ZP-CSI-RS, and a channel gain measurement based on a NZP-RS, in particular a NZP-CSI-RS, which is conventionally set to reflect a single, e.g., the lowest, DL transmit power level). Conventionally that means that the network node (also denoted as base station) still needs to determine which DL transmit power level to use when transmitting data to a given radio device (e.g., user), and the conventional determination may be incorrect, leading to a degradation of throughput and waste of energy. E.g., if the network node (also: base station) overestimates the backoff, a link adaptation and/or a rank adaption conventionally are suboptimal. Alternatively or in addition, if the network node (also: base station) underestimates the backoff, the CQI report will reflect that of a radio device (and/or a user) with a lower SINR resulting in a suboptimal modulation configuration selection (e.g., comprising the selection of a MCS, a rank, e.g., as a RI, and/or precoding matrix, e.g., as a PMI).

By the inventive technique (e.g., by the method 200 and/or the device 100), the conventional problem of selecting the correct, e.g. DL, transmit power (also: output power) is solved, in particular by starting from a number of possible hypotheses, H_1, H_2,..., H_K, together with optimal modulation configuration (e.g. the optimal rank, MCS and/or PMI) for that, e.g. DL, transmit power level (also: output power). According to the inventive technique, multiple CSI measurements are configured, one for each (e.g., power and/or modulation configuration) hypothesis, and by transmitting reference signals so that the measurements correctly reflect the, e.g. DL, transmit power level (also: output power) and distortion of the different hypotheses.

According to an embodiment, each CSI measurement is based on a CSI-IM resource (and/or a ZP-RS, in particular a ZP-CSI-RS), an NZP-CSI-RS and a power control offset (see, e.g., the parameter *powerControlOffset* of section 5.2.2.3.1 in the 3GPP document TS 38.214, v17.1.0).

Each hypothesis H_k may be associated with an DL transmit power level (also: output power) P_k and a distortion power level (also: distortion of power) d_k.

The inventive technique (e.g., the method 200) may contain the following steps: In a first step, the network (e.g., a network node) may configure the radio device (e.g., terminal) to perform multiple CSI measurements, such that there is at least one CSI measurement for each hypothesis. In a second step, the network node (also: base station) transmits (e.g., OFDM) symbols with NZP-RS (e.g., NZP-CSI-RS) and ZP-RS (and/or CSI-IM resource, e.g., for CSI-IM) with appropriate DL transmit power level and distortion power level (also denoted as: levels of signal power and distortion). In a third step, the radio device (e.g., terminal) feeds back CSI reports to the network (e.g., a network node). In a fourth step, the network (e.g., the network node) selects the DL transmit power level (also: output power) and other transmission parameters, in particular related to a modulation configuration, based on the CSI reports.

By the inventive technique (e.g., using the device 100 and/or the method 200), a DL transmit power level of the network node (also: base station) is based on multiple CSI measurements where each reflects the unique hypotheses that the network node (also: base station) can select to use when serving the radio device (e.g., terminal). The network node (also: base station) then selects which DL transmit power level, and/or which power backoff, to use based on the multiple CSI reports.

An adaptive scheme where the DL transmit power level (also: output power) is adjusted depending on the served radio device (e.g., user) can provide as good coverage as possible without sacrificing peak rates. For it to have the desired effect, it is crucial that the CSI, that the decisions (e.g., on the DL transmit power level and/or on the modulation configuration) are based on, properly reflects the DL transmit power levels (also: output power levels).

The inventive technique (e.g., the method 200) can ensure that the network node (also: base station) can adaptively (e.g., dynamically and/or semi-statically) select the DL transmit power level (also: output power) based on noise, interference and channel conditions limitations (e.g., provided in terms of SNR, SINR, SDNR, SDINR, and/or CQI) of the radio device (e.g., terminal) while also utilizing an optimal modulation configuration (e.g., rank, precoding matrix, and/or MCS) selection for the given radio device (e.g., user) and DL transmit power level (also: output power).

E.g., (cell edge) radio devices (e.g., terminals) limited by noise will have no or a low, or lower, power backoff (and/or a high DL transmit power level) and thus have a high, or higher, power efficiency and data rates, e.g., as compared to using a larger backoff (and/or a lower DL transmit power level).

Alternatively or in addition, radio devices (e.g., terminals) not limited by intercell interference or noise will have higher power backoff (and/or a lower DL transmit power level) to not be limited by distortions introduced by CFR. Thereby, high peak rates can be provided (also: offered).

By the inventive technique (e.g., using the method 200) an efficiency (e.g., of one or more PAs at a network node) and/or a coverage can be improved by reducing a PAPR while still being able to provide (also: offer) high (e.g., peak) data rates within the coverage area of the network (e.g., the network node). Alternatively or in addition, high data rates can be provided in a cell without penalizing performance for radio devices (e.g., terminals) at the cell edge.

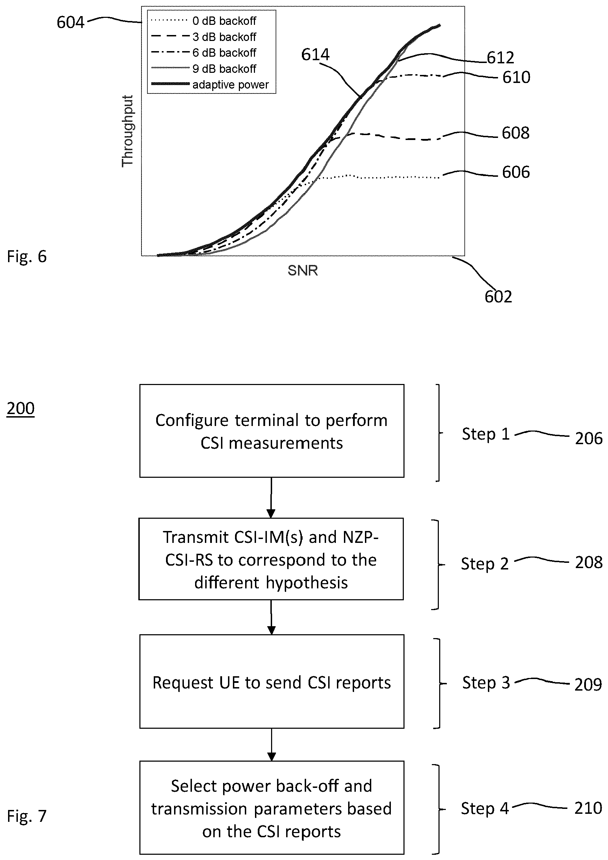

Fig. 4 illustrates an exemplary throughput 604 with different DL transmit power levels (also: output power levels), in particular using a maximal DL transit power level (and/or 0 dB backoff) 606 as well as three lower DL transmit power levels 608; 610; 612 with different backoff values (e.g., 3 dB, 6 dB, and/or 9 dB). The throughput 604 in Fig. 6 is exemplarily illustrated as a function of the SNR 602.

By the inventive technique (e.g., using the device 100 and/or the method 200), the network (e.g., a network node) can correctly select which DL transmit power level (also: output power) 606; 608; 610; 612 to use for a given radio device (also: user). By adaptively (e.g., dynamically and/or semi-statically) selecting the DL transmit power level (also: the output power) 606; 608; 610; 612, the network (e.g., the network node) is able to harvest the benefits in peak rates from having the lowest DL transmit power level (also: output power; e.g., the thin solid line at reference sign 612 in Fig. 6) while ensuring the coverage gains provided by the highest DL transmit power level (also: output power; e.g., the dotted line at reference sign 606 in Fig. 6).

Fig. 6 shows at reference sign 614 the results with adaptive (e.g., dynamic and/or semi-static) DL transmit power level (also: output power), e.g., represented by different backoffs compared to the maximum DL transmit power level (also: output power of the radio) when the modulation configuration (e.g., comprising PMI, rank and/or MCS) are selected optimally.

According to an embodiment, there are K DL transmit power (also: output power) hypotheses that the network node (also: base station) can select from when serving a radio device (e.g., user). K may be a (e.g., non-negative) integer number (in particular a natural number), e.g., between two and ten, preferably between two and four according to some embodiments. Let H_k be hypothesis k (e.g., for k∈ {1..K}), which is associated with a DL transmit power level (also: output power level) P_k and a distortion power level d_k. The relationship between P_k and d_k may, e.g., be based on past measurements of the radio and/or provided, e.g., in a table.

Fig. 7 shows an exemplary embodiment of the method 200. All steps of this embodiment may be performed by one network node (also: base station).

In a Step 1, at reference sign 206 in Fig. 7, the network node (also: base station) configures a radio device (e.g., terminal) for performing CSI measurements, e.g., schedules the ZP-RS (and/or the CSI-IM resource) and/or NZP-RS (e.g., NZP-CSI-RS) resources. The configuring and/or the scheduling includes determining a periodicity, an offset within each period, and/or exactly which CSI-RS configuration to choose.

An exact CSI-RS configuration may be specified by at least one of the *CSI-MeasConfig, CSI-ReportConfig, CSI-RS-ResourceMapping,* and *NZP-CSI-RS-Resource information elements* (also denoted as parameters), e.g., according to the 3GPP document TS 38.331, version 17.0.0, and/or according to specifications in section 7.4.1.5 of the 3GPP document TS 38.211, version 17.2.0. Alternatively or in addition, an exact CSI-RS configuration may comprise a set or REs and (e.g., for NZP-RSs, in particular NZP-CSI-RSs) a RS sequence mapped to the REs.

In an embodiment, the same physical resource is used for multiple NZP-RS (e.g., NZP-CSI-RS) measurements (e.g., corresponding to multiple hypotheses).

In another embodiment, the number of NZP-RS (e.g., ZP-CSI-RSs) corresponds to the number of hypotheses, where each NZP-RS (e.g., NZP-CSI-RS) is associated with one of the hypotheses, e.g., H_1,H_2,...,H_K.

In a further embodiment, which is combinable with any other embodiment, the network node (also: base station) uses a DL transmit power level P_k to transmit the NZP-RS (e.g., NZP-CSI-RS) associated with hypothesis H_k.

According to some embodiments, the same value of the DL transmit power level P_k may be used for transmitting the NZP-RS (e.g., NZP-CSI-RS) and for the data transmitting.

According to some other embodiments, an EPRE may be kept at the same power (e.g., the sum of powers of REs, e.g., within a PRB and/or within the same time resource) for the RS (e.g., comprising one or more NZP-RSs, in particular NZP-CSI-RSs) transmitting and the data transmitting. By keeping the EPRE at the same power, a DL transmit power level of the NZP-RS (e.g., NZP-CSI-RS) associated with a hypothesis H_k may differ from a DL transmit power level for the data transmitting associated with the hypothesis H_k.

According to still further embodiments, an EPRE may be set differently for the NZP-RS (e.g., NZP-CSI-RS) associated with a hypothesis H_k and the data transmitting associated with the hypothesis H_k. By setting the EPRE differently for the NZP-RS (e.g., NZP-CSI-RS) transmitting and the data transmitting, the DL transmit power level (and/or total transmit power) may be the same for the NZP-RS (e.g., NZP-CSI-RS) and the data. Alternatively or in addition, a distortion level for the data transmitting may be correctly taken into account based on the at least one CSI measurement on the RS (e.g., the NZP-RS, in particular NZP-CSI-RS) associated with the same hypothesis H_k.

In a still further embodiment, which is combinable with any embodiment specifying the NZP-RS measurements, the same ZP-RS (and/or CSI-IM resource, and/or the same physical resource, e.g., RE) is used for multiple CSI measurements (e.g., corresponding to multiple hypotheses).

In still another embodiment, which is combinable with any embodiment specifying the NZP-RS measurements, the number of ZP-RSs (and/or CSI-IM resources, and/or physical resources, e.g., REs) corresponds to the number of hypotheses, where each ZP-RS (and/or CSI-IM resource) is associated to one of the hypotheses, e.g., H_1,H_2,...,H_K.

In a still further embodiment, which is combinable with any other embodiment, the network node (also: base station) ensures that the distortion power level on the ZP-RSs (and/or CSI-IM resources) will be at most min(d_1,d_2,...,d_K). E.g., the distortion in CSI-IM resources may be controlled by scheduling all other subcarriers within that OFDM symbol that includes a ZP-RS (and/or CSI-IM resource) in a way such that the total power within that OFDM symbol corresponds to the minimum DL transmit power level (also: output power) min(P_1,P_2,...,P_K).

In a still further embodiment, which is combinable with any other embodiment, the network node (also: base station) ensures that the distortion power level on the ZP-RS (and/or CSI-IM resource) that is associated with a hypothesis, e.g., H_k, will be d_k. E.g., the distortion in a CSI-IM resource may be controlled (in particular decreased) by scheduling all other subcarriers within that OFDM symbol that includes a ZP-RS (and/or CSI-IM resource) in a way such that the total power within that OFDM symbol corresponds to the minimum DL transmit power level (also: output power) min(P_1,P_2,...,P_K). Alternatively or in addition, noise may be injected (e.g., artificially added) into the ZP-RSs (e.g., ZP-CSI-RSs) associated with the CSI-IM resources to represent a certain distortion d_k (in particular to increase distortions).

In a Step 2 at reference sign 208 in Fig. 7, the network node (also: base station) informs radio devices (e.g., terminals) which CSI-RS resource they shall use for CSI measurements and reporting. This includes signaling which NZP-RS (e.g., NZP-CSI-RS) to use for channel estimation, what power offset (e.g., according to a parameter *powerControlOffset)* to assume between the NZP-RS (e.g., NZP-CSI-RS) and data transmissions, and which ZP-RS (and/or CSI-IM resource) resource to use for interference measurements (and/or CSI-IM resource).

At least in some embodiments, the Steps 1 and/or 2 are performed when a new radio device (e.g., terminal) connects to the cell served by the network node (also: base station). Alternatively or in addition, the Steps 1 and/or 2 are not necessarily performed on a slot (and/or TTI) level, and/or within every period of transmitting the at least one RS, and/or within every period for performing the CSI-IM.

The radio device (e.g., user) is configured to do at least one CSI measurement per hypothesis.

In some embodiments, the radio device (e.g., UE) measures (e.g., on NZP-RS and/or ZP-RS) on the same physical resource for at least two hypotheses.

In an embodiment, the radio device (e.g., user) is configured to use different NZP-RSs (e.g., NZP-CSI-RSs) for different hypotheses. This may be the case when the network node (also: base station) transmits multiple NZP-RSs (NZP-CSI-RSs) using different DL transmit power levels (also: output powers), e.g., P_1,...,P_K, for the different NZP-RSs (e.g., NZP-CSI-RSs).

The DL transmit power levels associated with the different NZP-RSs (e.g., NZP-CSI-RSs) may be identical to the DL transmit power levels of data transmissions associated with the same hypothesis. Alternatively or in addition, the DL transmit power levels associated with the different NZP-RSs (e.g., NZP-CSI-RSs) may differ from the DL transmit power levels of the data transmissions associated with the same hypothesis. E.g., an EPRE may be (e.g., approximately) the same for the NZP-RS (e.g., NZP-CSI-RS) transmission and the data transmission, e.g., in order to achieve the correct distortion level based on the CSI report.

In another embodiment, the radio device (e.g., user) is configured to apply different power offsets (e.g., according to the parameter *powerControlOffset*) for different hypotheses. The parameter *powerControlOffset* may represent an assumed ratio of PDSCH energy-per-RE (EPRE) to NZP-RS EPRE (e.g., NZP-CSI-RS EPRE), when the radio device (e.g., UE) derives CSI feedback. The parameter *powerControlOffset* may takes values, e.g., in the range of [-8, 15] dB with 1 dB step size. This embodiment will typically be used when the same NZP-RS (e.g., NZP-CSI-RS) is used for all measurements.

A negative offset (e.g., a PDSCH EPRE lower than a NZP-RS EPRE) may be used if the hypothesis is for a lower DL transmit power level (e.g., compared to a maximum or nominal power). The negative offset may allow for the NZP-RS (e.g., the NZP-CSI-RS) transmit power (e.g., transmit power level) to be set independently of the hypothesis for the data transmitting.

Alternatively or in addition, a positive offset (e.g., a PDSCH EPRE higher than a NZW-RS EPRE) may be used for a hypothesis for a higher DL transmit power level (e.g., at or close to a maximum or nominal power). The positive offset may allow NZP-RSs (e.g., NZP-CSI-RSs) to be transmitted with a transmit power (e.g., transmit power level) that does not create too much distortion in the symbols where the NZP-RSs (e.g., NZP-CSI-RSs) are transmitted.

In yet another embodiment, the radio device (e.g., user) is configured to use different ZP-RSs (and/or different CSI-IM resources) for different hypotheses.

In a Step 3 at reference sign 209 in Fig. 7, the network node (also: base station) requests the radio devices (e.g., terminals) to send CSI reports which they determine using the CSI-RS configurations (e.g., comprising one or more NZP-RSs and/or one or more ZP-RSs for CSI-IM resources).

A specific radio device (e.g., UE) may be requested to provide the CSI report periodically, and/or, a-periodically, e.g., when needed because there is data to be transmitted and the last CSI report is outdated.

The network node (also: base station) receives the CSI report, e.g., from a specific radio device, which may include a rank indicator (RI) , a precoding matrix indicator (PMI), and/or a channel quality indicator (CQI) which the radio device (e.g., terminal) has determined using the configured CSI-RS resources (e.g., the NZP-RSs and/or the ZP-RSs).

In an embodiment, the radio device (e.g., user) is configured to feed back the result of all CSI measurements through CSI reports.

In another embodiment, the network node (also: base station) configures the radio device (e.g., user) to only feed back CSI reports for a subset of the CSI measurements along with information about which CSI-measurements they correspond to (e.g., using the CSI resource indicator, CRI, according to the 3GPP document TS 38.214, version 17.1.0). E.g., the subset may comprise a single CSI measurement that corresponds to the highest potential rate, and/ or a number of CSI measurements that correspond to multiple rates.

In a Step 4 at reference sign 210 in Fig. 7, the network node (also: base station) receives the CSI feedback and processes the CSI report in order to select a DL transmit power level (and/or a power backoff) for the data (e.g., PDSCH and/or DMRS) transmission based on the present and possibly also previous (e.g., most recent) CSI reports.

In one embodiment, the selected hypothesis, e.g., H_k, is the hypothesis which is associated with the CSI report that results in the highest expected throughput (e.g., as determined directly from the CQI and/or RI).

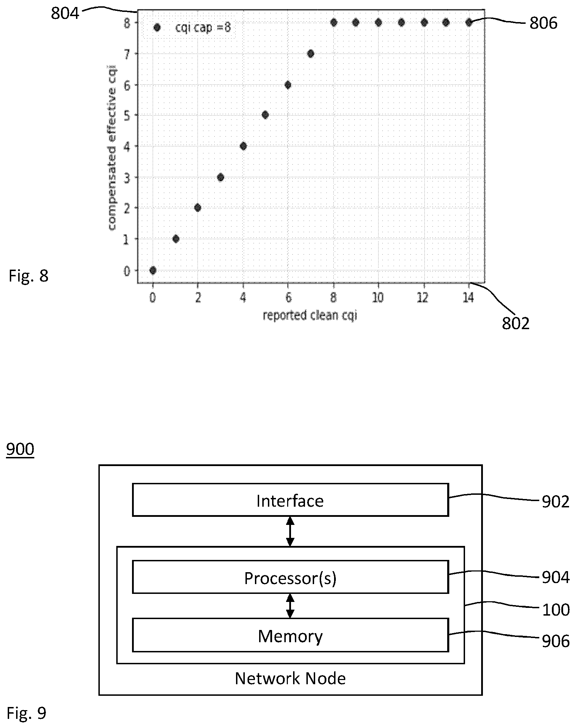

In another embodiment, each hypothesis, e.g., H_k, will be associated with a certain CQI cap as depicted at reference sign 806 in Fig. 8, where the CQI cap represents the highest CQI that can be selected for this hypothesis and still provide gains, given the distortion level d_k associated with the hypothesis.

The CQI may provide the supported modulation configuration (also denoted as transport format) for a given channel condition as measured by the at least one radio device (e.g., UE). Alternatively or in addition the CQI maps closely to a SNR, SINR, SDNR, and/or SDINR.

The higher the (e.g., the modulation order and/or code rate of the) modulation configuration (also denoted as transport format) is, the more sensitive any data transmission may be to distortions. By the CQI cap, a height of the modulation configuration (e.g., a modulation order and/or a code rate may be limited, e.g., to provide a (e.g., upper) limit on the sensitivity to distortions.

In Fig. 8, a reported clean CQI at reference sign 802 is assigned a compensated effective CQI at reference sign 804. The CQI cap 806 is applied to the compensated effective CQI 804.

In yet another embodiment, any CQI report above the CQI cap 806 will be set to the CQI cap 806 (e.g., for the purpose of comparing CQI reports and for modulation configuration, e.g., MCS, selection). E.g., in Fig. 8 a CQI cap 806 of 8 is exemplarily illustrated. The CQI cap 806 may, e.g., be used if the distortion of the ZP-RS (and/or the CSI-IM resource) is set to the lowest value, e.g., min(d_1,...,d_K).

In a still further embodiment, CSI reports are considered only if the (e.g., reported clean) CQI (e.g., at reference sign 802 in Fig. 8) is below and/or equal to the CQI cap 806.

In yet another embodiment, the network node (also: base station) may request new CSI reports if the CQI is above a predetermined threshold and/or above the CQI cap 806. The network node (also: base station) can then ensure that the distortion is higher within the ZP-RSs (and/or CSI-IM resources) for the second CSI reporting.

If the CQI is above the QCI cap 806 (and/or above the predetermined threshold) for a given power hypothesis, the CSI report becomes less useful because the at least one radio device (e.g., UE) may not have been able to take the distortions into account when deriving the CQI. Hence, a new CSI report may required and/or requested by the RAN (e.g., by one or more network nodes). Accurate CSI reports are beneficial for optimizing a link adaptation and hence for optimizing a link performance.

Fig. 9 shows a schematic block diagram for an embodiment of the device 100. The device 100 comprises processing circuitry, e.g., one or more processors 904 for performing the method 300 and memory 906 coupled to the processors 904. For example, the memory 906 may be encoded with instructions that implement at least one of the modules 102, 104 and 106.

The one or more processors 904 may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the device 100, such as the memory 906, transmitter functionality. For example, the one or more processors 904 may execute instructions stored in the memory 906. Such functionality may include providing various features and steps discussed herein, including any of the benefits disclosed herein. The expression "the device being operative to perform an action" may denote the device 100 being configured to perform the action.

As schematically illustrated in Fig. 9, the device 100 may be embodied by a network node 900, e.g., functioning as a transmitting base station (e.g., for transmitting the configuration message in the step 206, the at least one RS in the step 208 and/or the data in the step 212). The network node 900 comprises a radio interface 902 coupled to the device 100 for radio communication with one or more radio devices, e.g., functioning as a receiving UE (e.g., for receiving the configuration message, the at least one RS and the data, and/or for transmitting the at least one CSI report).

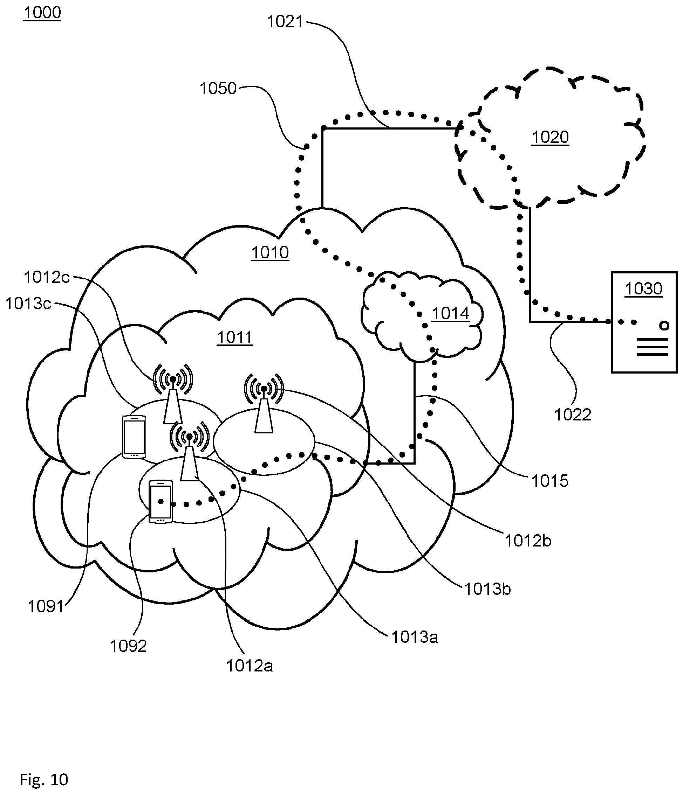

With reference to Fig. 10, in accordance with an embodiment, a communication system 1000 includes a telecommunication network 1010, such as a 3GPP-type cellular network, which comprises an access network 1011, such as a radio access network, and a core network 1014. The access network 1011 comprises a plurality of base stations 1012a, 1012b, 1012c (e.g., embodying the device 100 or network node 900, and/or embodying a first network node and at least one second network node for jointly performing the method 200), such as NBs, eNBs, gNBs or other types of wireless access points, each defining a corresponding coverage area 1013a, 1013b, 1013c (e.g., as the cell of the RAN served by the respective base station and/or network node). Each base station 1012a, 1012b, 1012c is connectable to the core network 1014 over a wired or wireless connection 1015. A first user equipment (UE) 1091 located in coverage area 1013c is configured to wirelessly connect to, or be paged by, the corresponding base station 1012c. A second UE 1092 in coverage area 1013a is wirelessly connectable to the corresponding base station 1012a. While a plurality of UEs 1091, 1092 are illustrated in this example, the disclosed embodiments are equally applicable to a situation where a sole UE is in the coverage area or where a sole UE is connecting to the corresponding base station 1012.

Any of the base stations 1012 may embody the device 100.

The telecommunication network 1010 is itself connected to a host computer 1030, which may be embodied in the hardware and/or software of a standalone server, a cloud-implemented server, a distributed server or as processing resources in a server farm. The host computer 1030 may be under the ownership or control of a service provider, or may be operated by the service provider or on behalf of the service provider. The connections 1021, 1022 between the telecommunication network 1010 and the host computer 1030 may extend directly from the core network 1014 to the host computer 1030 or may go via an optional intermediate network 1020. The intermediate network 1020 may be one of, or a combination of more than one of, a public, private or hosted network; the intermediate network 1020, if any, may be a backbone network or the Internet; in particular, the intermediate network 1020 may comprise two or more sub-networks (not shown).

The communication system 1000 of Fig. 10 as a whole enables connectivity between one of the connected UEs 1091, 1092 and the host computer 1030. The connectivity may be described as an over-the-top (OTT) connection 1050. The host computer 1030 and the connected UEs 1091, 1092 are configured to communicate data and/or signaling via the OTT connection 1050, using the access network 1011, the core network 1014, any intermediate network 1020 and possible further infrastructure (not shown) as intermediaries. The OTT connection 1050 may be transparent in the sense that the participating communication devices through which the OTT connection 1050 passes are unaware of routing of uplink and downlink communications. For example, a base station 1012 need not be informed about the past routing of an incoming downlink communication with data originating from a host computer 1030 to be forwarded (e.g., handed over) to a connected UE 1091. Similarly, the base station 1012 need not be aware of the future routing of an outgoing uplink communication originating from the UE 1091 towards the host computer 1030.

By virtue of the method 200 being performed by any one of the base stations 1012, the performance or range of the OTT connection 1050 can be improved, e.g., in terms of increased throughput and/or reduced latency. More specifically, the host computer 1030 may indicate to the RAN or the device 100 (e.g., on an application layer) the quality of service (QoS) of the traffic.

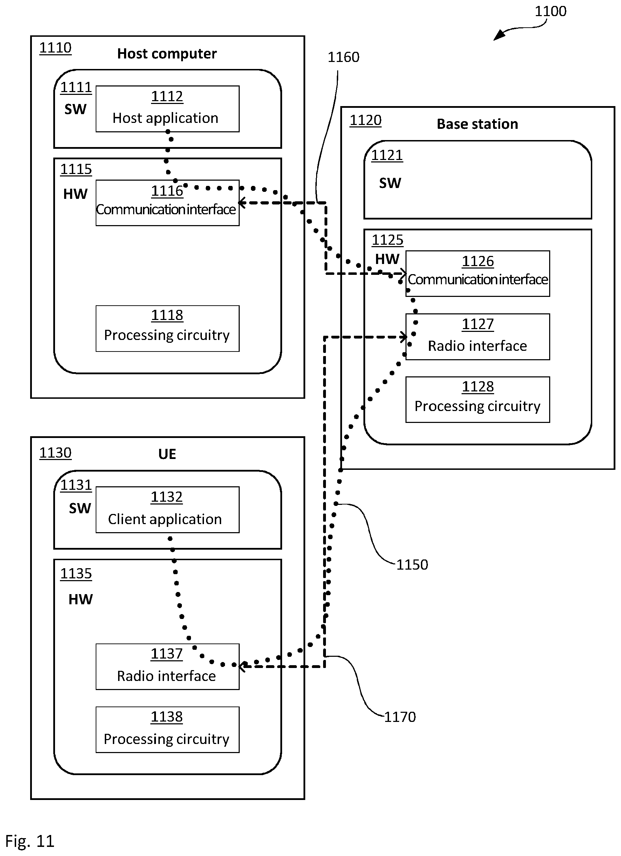

Example implementations, in accordance with an embodiment of the UE, base station and host computer discussed in the preceding paragraphs, will now be described with reference to Fig. 11. In a communication system 1100, a host computer 1110 comprises hardware 1115 including a communication interface 1116 configured to set up and maintain a wired or wireless connection with an interface of a different communication device of the communication system 1100.

The host computer 1110 further comprises processing circuitry 1118, which may have storage and/or processing capabilities. In particular, the processing circuitry 1118 may comprise one or more programmable processors, application-specific integrated circuits, field programmable gate arrays or combinations of these (not shown) adapted to execute instructions. The host computer 1110 further comprises software 1111, which is stored in or accessible by the host computer 1110 and executable by the processing circuitry 1118. The software 1111 includes a host application 1112. The host application 1112 may be operable to provide a service to a remote user, such as a UE 1130 connecting via an OTT connection 1150 terminating at the UE 1130 and the host computer 1110. In providing the service to the remote user, the host application 1112 may provide user data, which is transmitted using the OTT connection 1150. The user data may depend on the location of the UE 1130. The user data may comprise auxiliary information or precision advertisements (also: ads) delivered to the UE 1130. The location may be reported by the UE 1130 to the host computer, e.g., using the OTT connection 1150, and/or by the base station 1120, e.g., using a connection 1160.

The communication system 1100 further includes a base station 1120 (e.g., embodying the device 100 and/or the network node 900, or any one of the first network node and at least one second network node jointly performing the method 200) provided in a telecommunication system and comprising hardware 1125 enabling it to communicate with the host computer 1110 and with the UE 1130. The hardware 1125 may include a communication interface 1126 for setting up and maintaining a wired or wireless connection with an interface of a different communication device of the communication system 1100, as well as a radio interface 1127 for setting up and maintaining at least a wireless connection 1170 with a UE 1130 located in a coverage area (not shown in Fig. 11) served by the base station 1120. The communication interface 1126 may be configured to facilitate a connection 1160 to the host computer 1110. The connection 1160 may be direct, or it may pass through a core network (not shown in Fig. 11) of the telecommunication system and/or through one or more intermediate networks outside the telecommunication system. In the embodiment shown, the hardware 1125 of the base station 1120 further includes processing circuitry 1128, which may comprise one or more programmable processors, application-specific integrated circuits, field programmable gate arrays or combinations of these (not shown) adapted to execute instructions. The base station 1120 further has software 1121 stored internally or accessible via an external connection.

The communication system 1100 further includes the UE 1130 already referred to. Its hardware 1135 may include a radio interface 1137 configured to set up and maintain a wireless connection 1170 with a base station serving a coverage area in which the UE 1130 is currently located. The hardware 1135 of the UE 1130 further includes processing circuitry 1138, which may comprise one or more programmable processors, application-specific integrated circuits, field programmable gate arrays or combinations of these (not shown) adapted to execute instructions. The UE 1130 further comprises software 1131, which is stored in or accessible by the UE 1130 and executable by the processing circuitry 1138. The software 1131 includes a client application 1132. The client application 1132 may be operable to provide a service to a human or non-human user via the UE 1130, with the support of the host computer 1110. In the host computer 1110, an executing host application 1112 may communicate with the executing client application 1132 via the OTT connection 1150 terminating at the UE 1130 and the host computer 1110. In providing the service to the user, the client application 1132 may receive request data from the host application 1112 and provide user data in response to the request data. The OTT connection 1150 may transfer both the request data and the user data. The client application 1132 may interact with the user to generate the user data that it provides.

It is noted that the host computer 1110, base station 1120 and UE 1130 illustrated in Fig. 11 may be identical to the host computer 1030, one of the base stations 1012a, 1012b, 1012c and one of the UEs 1091, 1092 of Fig. 10, respectively. This is to say, the inner workings of these entities may be as shown in Fig. 11, and, independently, the surrounding network topology may be that of Fig. 10.

In Fig. 11, the OTT connection 1150 has been drawn abstractly to illustrate the communication between the host computer 1110 and the UE 1130 via the base station 1120, without explicit reference to any intermediary devices and the precise routing of messages via these devices. Network infrastructure may determine the routing, which it may be configured to hide from the UE 1130 or from the service provider operating the host computer 1110, or both. While the OTT connection 1150 is active, the network infrastructure may further take decisions by which it dynamically changes the routing (e.g., on the basis of load balancing consideration or reconfiguration of the network).

The wireless connection 1170 between the UE 1130 and the base station 1120 is in accordance with the teachings of the embodiments described throughout this disclosure. One or more of the various embodiments improve the performance of OTT services provided to the UE 1130 using the OTT connection 1150, in which the wireless connection 1170 forms the last segment. More precisely, the teachings of these embodiments may reduce the latency and improve the data rate and thereby provide benefits such as better responsiveness and improved QoS.

A measurement procedure may be provided for the purpose of monitoring data rate, latency, QoS and other factors on which the one or more embodiments improve. There may further be an optional network functionality for reconfiguring the OTT connection 1150 between the host computer 1110 and UE 1130, in response to variations in the measurement results. The measurement procedure and/or the network functionality for reconfiguring the OTT connection 1150 may be implemented in the software 1111 of the host computer 1110 or in the software 1131 of the UE 1130, or both. In embodiments, sensors (not shown) may be deployed in or in association with communication devices through which the OTT connection 1150 passes; the sensors may participate in the measurement procedure by supplying values of the monitored quantities exemplified above, or supplying values of other physical quantities from which software 1111, 1131 may compute or estimate the monitored quantities. The reconfiguring of the OTT connection 1150 may include message format, retransmission settings, preferred routing etc.; the reconfiguring need not affect the base station 1120, and it may be unknown or imperceptible to the base station 1120. Such procedures and functionalities may be known and practiced in the art. In certain embodiments, measurements may involve proprietary UE signaling facilitating the host computer's 1110 measurements of throughput, propagation times, latency and the like. The measurements may be implemented in that the software 1111, 1131 causes messages to be transmitted, in particular empty or "dummy" messages, using the OTT connection 1150 while it monitors propagation times, errors etc.

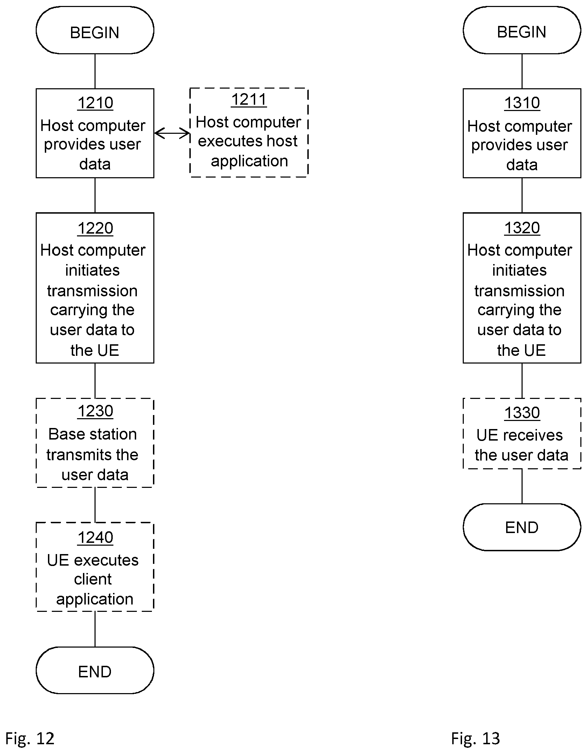

Fig. 12 is a flowchart illustrating a method implemented in a communication system, in accordance with one embodiment. The communication system includes a host computer, a base station (e.g., embodying the device 100, the network node 900 and/or any one of the first network node and at least one second network node jointly performing the method 200) and a UE which may be those described with reference to Figs. 10 and 11. For simplicity of the present disclosure, only drawing references to Fig. 12 will be included in this paragraph. In a first step 1210 of the method, the host computer provides user data. In an optional substep 1211 of the first step 1210, the host computer provides the user data by executing a host application. In a second step 1220, the host computer initiates a transmission carrying the user data to the UE. In an optional third step 1230, the base station transmits to the UE the user data which was carried in the transmission that the host computer initiated, in accordance with the teachings of the embodiments described throughout this disclosure. In an optional fourth step 1240, the UE executes a client application associated with the host application executed by the host computer.

Fig. 13 is a flowchart illustrating a method implemented in a communication system, in accordance with one embodiment. The communication system includes a host computer, a base station (e.g., embodying the device 100, the network node 900 and/or any one of the first network node and at least one second network node jointly performing the method 200) and a UE which may be those described with reference to Figs. 10 and 11. For simplicity of the present disclosure, only drawing references to Fig. 13 will be included in this paragraph. In a first step 1310 of the method, the host computer provides user data. In an optional substep (not shown) the host computer provides the user data by executing a host application. In a second step 1320, the host computer initiates a transmission carrying the user data to the UE. The transmission may pass via the base station, in accordance with the teachings of the embodiments described throughout this disclosure. In an optional third step 1330, the UE receives the user data carried in the transmission.

As has become apparent from above description, at least some embodiments of the technique allow for dynamically (and/or semi-statically) selecting (also denoted as adaptively adjusting) a DL transmit power level. The DL transmit power of a network node (also: base station) is based on multiple CSI measurements, where each reflects a unique hypothesis that the network node (also: base station) can select to use when serving a radio device (also: terminal). The network node (also: base station) is enabled to select which DL transmit power level (or power backoff) to use based on the multiple CSI reports.

The adaptive scheme herein, where the DL transmit power (also: output power) is adjusted depending on the served radio device (also: user) can provide as good coverage (e.g., from a cell center to a cell edge) as possible without sacrificing peak rates. For it to have the desired effect, it is crucial that the CSI, on which the selection of the DL transmit power level is based, properly reflects the DL transmit (also: output) power levels.

The inventive technique ensures that the network node (also: base station) can adaptively (e.g., dynamically and/or semi-statically) select a DL transmit power level (also: output power level, or shortly: output power) based on noise, interference and channel conditions limitations of the radio device (also: terminal) while also utilizing an optimal modulation configuration (e.g., comprising a MCS, RI, and/or PMI) selection for the given radio device (e.g., user) and DL transmit power level (also: output power). E.g., (in particular cell edge) radio devices (e.g., terminals) limited by noise will have no or low (or lower) power backoff and thus have high (or higher) power efficiency and data rates as compared to using a larger backoff. Alternatively or in addition, (in particular cell center) radio devices (e.g., terminals) not limited by intercell interference or noise will have higher power backoff to not be limited by distortions introduced by CFR. High peak rates can be provided to (in particular cell center) radio devices, e.g., by using a high MCS.

By the inventive technique, efficiency and/or coverage may be improved by reducing a PAPR while still being able to offer high (e.g., peak) data rates within the coverage area of the network (e.g., a cell and/or a network node). Alternatively or in addition, high data rates can be provided in cell without penalizing performance for radio devices (also: terminals) at the cell edge.

In particular Fig. 6 schematically illustrates a throughput with different DL transmit power levels (also: output power levels). By the inventive technique, the network (e.g., a network node) is able to correctly select (e.g., dynamically and/or semi-statically) which DL transmit power level (also: output power) to use for a given radio device (also: user). By adaptively (e.g., dynamically and/or semi-statically) selecting the DL transmit power level (also: output power), the network (e.g., a network node) is able to harvest the benefits in peak rates from having the lowest DL transmit power level (also: output power) while ensuring the coverage gains provided by the highest DL transmit power level (also: output power).

The inventive technique can lead to energy improvements at the level of a node equipment (e.g., at the power amplifiers of a network node). Alternatively or in addition, the inventive technique can be applied to a Fourth Generation (4G) RAN, a Fifth Generation (5G) RAN, an evolved Node B (eNB) according the 3GPP LTE standard, and/or a next Generation Node B (eNB) according to the 3GPP New Radio (NR) standard. Further alternatively or in addition, the inventive technique can improve on limitless connectivity.

Many advantages of the present invention will be fully understood from the foregoing description, and it will be apparent that various changes may be made in the form, construction and arrangement of the units and devices without departing from the scope of the invention and/or without sacrificing all of its advantages. Since the invention can be varied in many ways, it will be recognized that the invention should be limited only by the scope of the following claims.

## Claims

1. A method (200) performed by a network node (100) of selecting a downlink, DL, transmit power level from a plurality of DL transmit power levels (606; 608; 610; 612) for transmitting data to at least one radio device (1091; 1092; 1130) in a cell of a radio access network, RAN (1011), the method (200) comprising the steps of:
transmitting (206) a configuration message to the at least one radio device (1091; 1092; 1130), the configuration message being indicative of at least one channel state information, CSI, measurement associated with at least one hypothesis, wherein the at least one hypothesis comprises a DL transmit power level (606; 608; 610; 612), wherein the DL transmit power level (606; 608; 610; 612) is comprised in the plurality of DL transmit power levels (606; 608; 610; 612);
transmitting (208) at least one reference signal, RS, associated with the at least one hypothesis, on which the at least one radio device (1091; 1092; 1130) is configured to perform the CSI measurement according to the transmitted (206) configuration message;
receiving (210), from the at least one radio device (1091; 1092; 1130), at least one CSI report associated with at least one CSI measurement indicated in the configuration message; and
transmitting (212) data to the at least one radio device (1091; 1092; 1130), wherein a modulation configuration and a DL transmit power level (606; 608; 610; 612) are selected for the transmitting (212) of the data based on the received (210) at least one CSI report.

2. The method (200) of claim 1, wherein the modulation configuration comprises at least one of:
a rank indicator, RI;
a modulation and coding scheme, MCS; and
a precoding matrix indicator, PMI.

3. The method (200) of claim 1 or 2, further comprising the step of selecting (204) the at least one hypothesis from a set of hypotheses, wherein the set of hypotheses comprises at least two different hypotheses, the method:
further comprising the step of generating (202) the set of hypotheses, or
wherein each hypothesis within the set of hypotheses is associated with a distortion power level, or
wherein the set of hypotheses is provided in a table, wherein the table comprises the distortion power level.

4. The method (200) of any one of claims 1 to 3, wherein the at least one RS comprises at least one of a non-zero-power, NZP, RS, optionally a CSI-RS, and a zero-power, ZP, RS.

5. The method (200) of claim 4, wherein the at least one hypothesis comprises at least two hypotheses with different DL transmit power levels (606; 608; 610; 612) and wherein each hypothesis comprising a different DL transmit power level (606; 608; 610; 612) is associated with a different NZP-RS, or
wherein the at least one hypothesis comprises at least two hypotheses with different DL transmit power levels (606; 608; 610; 612) and wherein the NZP-RSs associated with at least two of the at least two hypotheses comprise identical time resources, identical frequency resources, and/or identical beam directions, or
wherein the ZP-RS is identical for a subset, or all, of the at least one hypothesis or
wherein a number of CSI interference measurements, CSI-IM, comprised in the transmitted (206) configuration messages equals a number of the at least one hypothesis comprised in the transmitted (206) configuration message.

6. The method (200) of any one of claims 1 to 5, wherein the step of transmitting (206) the configuration message is performed when the at least one radio device (1091; 1092; 1130) connects to the cell, or
wherein the method (200) is performed by at least one network node (100; 900; 1012; 1012a; 1012b; 1012c; 1120) serving the cell, or
wherein the RAN (1011) comprises a first network node (100; 900; 1012; 1012a; 1012b; 1012c; 1120) and at least one second network node (900; 1012; 1012a; 1012b; 1012c; 1120), wherein at least the step of transmitting (206) the configuration message and/or receiving (210) the at least one CSI report is performed by the first network node (100; 900; 1012; 1012a; 1012b; 1012c; 1120), and wherein the steps of transmitting (208) the at least one RS and transmitting (212) data are performed by the at least one second network node (100; 900; 1012; 1012a; 1012b; 1012c; 1120), or
wherein the received (210) at least one CSI report comprises at least one RI, at least one PMI, and/or at least one channel quality indicator, CQI, or
wherein the transmitted (208; 209) configuration message, or a further configuration message, is indicative of the at least one radio device (1091; 1092; 1130) being configured for periodic CSI reporting and/or for aperiodic CSI reporting.

7. The method (200) of any one of claims 1 to 6, wherein the transmitted (208; 209) configuration message, or a further configuration message, is indicative of reporting only on a subset of the at least one CSI measurement, the method further comprising:
wherein the CSI report is indicative of one or more hypotheses with the highest potential data rates and/or potential data rates exceeding a predetermined threshold, or
wherein the CSI report only takes into account the at least one hypothesis for a CQI below a predetermined threshold.

8. The method (200) of any one of claims 1 to 7, wherein for the data transmitting (212), the hypothesis with the highest expected throughput is applied, wherein the highest expected throughput is determined based on a channel quality indicator, CQI, and/or a RI comprised in the received (210) at least one CSI report.

9. The method (200) of any one of claims 1 to 8, wherein the step of data transmitting (212) comprises transmitting (212) data to at least two radio devices (1091; 1092; 1130) using the same DL transmit power level (606; 608; 610; 612).

10. The method (200) of any one of claims 1 to 9, wherein the transmitted (208; 209) configuration message, or a further configuration message, is indicative of a scheduling of the at least one RS, wherein the transmitted (206) configuration message is further indicative at least one of:
a periodicity of transmitting (208) the at least one RS;
an offset of transmitting (208) the at least one RS within a period;
a frequency of the transmitted (208) at least one RS; and
an exact RS configuration.

11. A computer program product comprising program code portions for performing the steps of any one of the claims 1 to 10 when the computer program product is executed on one or more computing devices (904) of a network node (100), said computer program product being stored on a computer-readable recording medium (906).

12. A network node (100; 900; 1012; 1012a; 1012b; 1012c; 1120) for selecting a downlink, DL, transmit power level from a plurality of DL transmit power levels (606; 608; 610; 612) for transmitting data to at least one radio device (1091; 1092; 1130) in a cell of a radio access network, RAN (1011), the network node (100; 900; 1012; 1012a; 1012b; 1012c; 1120) configured to:
transmit a configuration message to the at least one radio device (1091; 1092; 1130), the configuration message being indicative of at least one channel state information, CSI, measurement associated with at least one hypothesis, wherein the at least one hypothesis comprises a DL transmit power level (606; 608; 610; 612), wherein the DL transmit power level (606; 608; 610; 612) is comprised in the plurality of DL transmit power levels (606; 608; 610; 612);
transmit at least one reference signal, RS, associated with the at least one hypothesis, on which the at least one radio device (1091; 1092; 1130) is configured to perform the CSI measurement according to the transmitted configuration message;
receive, from the at least one radio device (1091; 1092; 1130), at least one CSI report associated with at least one CSI measurement indicated in the configuration message; and
transmit data to the at least one radio device (1091; 1092; 1130), wherein a modulation configuration and a DL transmit power level (606; 608; 610; 612) are selected for the transmitting of the data based on the received at least one CSI report.

13. The network node (100; 900; 1012; 1012a; 1012b; 1012c; 1120) of claim 12, further configured to perform the steps, or comprise the features, of any one of claims 2 to 10.

14. A base station (100; 900; 1012; 1012a; 1012b; 1012c; 1120) configured to communicate with a user equipment, UE (1091; 1092; 1130), the base station (1012; 1012a; 1012b; 1012c; 1120) comprising a radio interface (902; 1127) and processing circuitry (904; 1128) configured to execute the steps of any one of claims 1 to 10.

15. A communication system (1000; 1100) including a host computer (1030; 1110) comprising processing circuitry (1118) configured to provide user data and a communication interface (1116) configured to forward user data to a cellular radio network (1011) for transmission to a user equipment, UE (1091; 1092; 1130);
the communication system (1000; 1100) further including at least one base station (100; 900; 1012; 1120) of said cellular radio network (1011), the at least one base station (100; 900; 1012; 1012a; 1012b; 1012c; 1120) configured to communicate with the UE (1091; 1092; 1130), wherein the at least one base station (100; 900; 1012; 1012a; 1012b; 1012c; 1120) comprises a radio interface (902; 1127) and processing circuitry (904; 1128), the processing circuitry (904; 1128) of the at least one base station (1012; 1012a; 1012b; 1012c; 1120) being configured to execute the steps of any one of claims 1 to 10, the communication system further including the UE (1091; 1092; 1130),
wherein the processing circuitry (1118) of the host computer (1030; 1110) is configured to execute a host application (1112), thereby providing the user data; and
wherein the processing circuitry (1138) of the UE (1091; 1092; 1130) is configured to execute a client application (1132) associated with the host application (1112).

## Patentansprüche

1. Ein Verfahren (200), das von einem Netzwerkknoten (100) durchgeführt wird, zum Auswählen eines Downlink(DL)-Sendeleistungspegels aus einer Vielzahl von DL-Sendeleistungspegeln (606; 608; 610; 612) zum Senden von Daten an mindestens eine Funkvorrichtung (1091; 1092; 1130) in einer Zelle eines Funkzugangsnetzwerks, RAN (1011), wobei das Verfahren (200) die folgenden Schritte beinhaltet:
Senden (206) einer Konfigurationsnachricht an die mindestens eine Funkvorrichtung (1091; 1092; 1130), wobei die Konfigurationsnachricht mindestens eine Kanalzustandsinformations(CSI)-Messung anzeigt, die mit mindestens einer Hypothese assoziiert ist, wobei die mindestens eine Hypothese einen DL-Sendeleistungspegel (606; 608; 610; 612) beinhaltet, wobei der DL-Sendeleistungspegel (606; 608; 610; 612) in der Vielzahl von DL-Sendeleistungspegeln (606; 608; 610; 612) enthalten ist;
Senden (208) mindestens eines Referenzsignals, RS, das mit der mindestens einen Hypothese assoziiert ist, auf dem die mindestens eine Funkvorrichtung (1091; 1092; 1130) konfiguriert ist, um die CSI-Messung gemäß der gesendeten (206) Konfigurationsnachricht durchzuführen;
Empfangen (210), von der mindestens einen Funkvorrichtung (1091; 1092; 1130), mindestens eines CSI-Berichts, der mit mindestens einer CSI-Messung assoziiert ist, die in der Konfigurationsnachricht angezeigt wird; und
Senden (212) von Daten an die mindestens eine Funkvorrichtung (1091; 1092; 1130), wobei eine Modulationskonfiguration und ein DL-Sendeleistungspegel (606; 608; 610; 612) für das Senden (212) der Daten basierend auf dem empfangenen (210) mindestens einen CSI-Bericht ausgewählt werden.

2. Verfahren (200) gemäß Anspruch 1, wobei die Modulationskonfiguration mindestens eines von Folgendem beinhaltet:
einen Rangindikator, RI;
ein Modulations- und Codierungsschema, MCS; und
einen Vorcodierungsmatrixindikator, PMI.

3. Verfahren (200) gemäß Anspruch 1 oder 2, das ferner den Schritt des Auswählens (204) der mindestens einen Hypothese aus einem Satz Hypothesen beinhaltet, wobei der Satz Hypothesen mindestens zwei unterschiedliche Hypothesen beinhaltet, wobei das Verfahren
ferner den Schritt des Erzeugens (202) des Satzes Hypothesen beinhaltet oder
wobei jede Hypothese innerhalb des Satzes Hypothesen mit einem Verzerrungsleistungspegel assoziiert ist oder
wobei der Satz Hypothesen in einer Tabelle bereitgestellt wird, wobei die Tabelle den Verzerrungsleistungspegel beinhaltet.

4. Verfahren (200) gemäß einem der Ansprüche 1 bis 3, wobei das mindestens eine RS mindestens eines von einem Nicht-Nullleistungs(NZP)-RS, optional einem CSI-RS, und einem Nullleistungs(ZP)-RS beinhaltet.

5. Verfahren (200) gemäß Anspruch 4, wobei die mindestens eine Hypothese mindestens zwei Hypothesen mit unterschiedlichen DL-Sendeleistungspegeln (606; 608; 610; 612) beinhaltet und wobei jede Hypothese, die einen unterschiedlichen DL-Sendeleistungspegel (606; 608; 610; 612) beinhaltet, mit einem unterschiedlichen NZP-RS assoziiert ist oder
wobei die mindestens eine Hypothese mindestens zwei Hypothesen mit unterschiedlichen DL-Sendeleistungspegeln (606; 608; 610; 612) beinhaltet und wobei die NZP-RSs, die mit mindestens zwei der mindestens zwei Hypothesen assoziiert sind, identische Zeitressourcen, identische Frequenzressourcen und/oder identische Strahlrichtungen beinhalten oder
wobei das ZP-RS für eine Teilmenge oder alle der mindestens einen Hypothese identisch ist oder
wobei eine Anzahl von CSI-Interferenzmessungen, CSI-IM, die in den gesendeten (206) Konfigurationsnachrichten enthalten sind, gleich einer Anzahl der mindestens einen Hypothese ist, die in der gesendeten (206) Konfigurationsnachricht enthalten ist.

6. Verfahren (200) gemäß einem der Ansprüche 1 bis 5, wobei der Schritt des Sendens (206) der Konfigurationsnachricht durchgeführt wird, wenn sich die mindestens eine Funkvorrichtung (1091; 1092; 1130) mit der Zelle verbindet, oder
wobei das Verfahren (200) von mindestens einem Netzwerkknoten (100; 900; 1012; 1012a; 1012b; 1012c; 1120) durchgeführt wird, der die Zelle bedient, oder
wobei das RAN (1011) einen ersten Netzwerkknoten (100; 900; 1012; 1012a; 1012b; 1012c; 1120) und mindestens einen zweiten Netzwerkknoten (900; 1012; 1012a; 1012b; 1012c; 1120) beinhaltet, wobei mindestens der Schritt des Sendens (206) der Konfigurationsnachricht und/oder des Empfangens (210) des mindestens einen CSI-Berichts von dem ersten Netzwerkknoten (100; 900; 1012; 1012a; 1012b; 1012c; 1120) durchgeführt wird und wobei die Schritte des Sendens (208) des mindestens einen RS und des Sendens (212) von Daten von dem mindestens einen zweiten Netzwerkknoten (100; 900; 1012; 1012a; 1012b; 1012c; 1120) durchgeführt werden oder
wobei der empfangene (210) mindestens eine CSI-Bericht mindestens einen RI, mindestens einen PMI und/oder mindestens einen Kanalqualitätsindikator, CQI,
beinhaltet oder
wobei die gesendete (208; 209) Konfigurationsnachricht oder eine weitere Konfigurationsnachricht anzeigt, dass die mindestens eine Funkvorrichtung (1091; 1092; 1130) für periodisches CSI-Berichten und/oder für aperiodisches CSI-Berichten konfiguriert ist.

7. Verfahren (200) gemäß einem der Ansprüche 1 bis 6, wobei die gesendete (208; 209) Konfigurationsnachricht oder eine weitere Konfigurationsnachricht das Berichten nur über eine Teilmenge der mindestens einen CSI-Messung anzeigt, wobei das Verfahren ferner Folgendes beinhaltet:
wobei der CSI-Bericht eine oder mehrere Hypothesen mit den höchsten potenziellen Datenraten und/oder potenziellen Datenraten anzeigt, die einen vorbestimmten Schwellenwert überschreiten, oder
wobei der CSI-Bericht nur die mindestens eine Hypothese für einen CQI unter einem vorbestimmten Schwellenwert berücksichtigt.

8. Verfahren (200) gemäß einem der Ansprüche 1 bis 7, wobei für das Senden (212) von Daten die Hypothese mit dem höchsten erwarteten Durchsatz angewendet wird, wobei der höchste erwartete Durchsatz basierend auf einem Kanalqualitätsindikator, CQI, und/oder einem RI bestimmt wird, der/die in dem empfangenen (210) mindestens einen CSI-Bericht enthalten ist/sind.

9. Verfahren (200) gemäß einem der Ansprüche 1 bis 8, wobei der Schritt des Sendens (212) von Daten das Senden (212) von Daten an mindestens zwei Funkvorrichtungen (1091; 1092; 1130) unter Verwendung desselben DL-Sendeleistungspegels (606; 608; 610; 612) beinhaltet.

10. Verfahren (200) gemäß einem der Ansprüche 1 bis 9, wobei die gesendete (208; 209) Konfigurationsnachricht oder eine weitere Konfigurationsnachricht ein Scheduling des mindestens einen RS anzeigt,
wobei die gesendete (206) Konfigurationsnachricht ferner mindestens eines von Folgendem anzeigt:
eine Periodizität des Sendens (208) des mindestens einen RS;
einen Versatz des Sendens (208) des mindestens einen RS innerhalb einer Periode;
eine Frequenz des gesendeten (208) mindestens einen RS; und
eine exakte RS-Konfiguration.

11. Ein Rechnerprogrammprodukt, das Programmcodeabschnitte zum Durchführen der Schritte gemäß einem der Ansprüche 1 bis 10 beinhaltet, wenn das Rechnerprogrammprodukt auf einer oder mehreren Rechenvorrichtungen (904) eines Netzwerkknotens (100) ausgeführt wird, wobei das Rechnerprogrammprodukt auf einem rechnerlesbaren Aufzeichnungsmedium (906) gespeichert ist.

12. Ein Netzwerkknoten (100; 900; 1012; 1012a; 1012b; 1012c; 1120) zum Auswählen eines Downlink(DL)-Sendeleistungspegels aus einer Vielzahl von DL-Sendeleistungspegeln (606; 608; 610; 612) zum Senden von Daten an mindestens eine Funkvorrichtung (1091; 1092; 1130) in einer Zelle eines Funkzugangsnetzwerks, RAN (1011), wobei der Netzwerkknoten (100; 900; 1012; 1012a; 1012b; 1012c; 1120) für Folgendes konfiguriert ist:
Senden einer Konfigurationsnachricht an die mindestens eine Funkvorrichtung (1091; 1092; 1130), wobei die Konfigurationsnachricht mindestens eine Kanalzustandsinformations(CSI)-Messung anzeigt, die mit mindestens einer Hypothese assoziiert ist, wobei die mindestens eine Hypothese einen DL-Sendeleistungspegel (606; 608; 610; 612) beinhaltet, wobei der DL-Sendeleistungspegel (606; 608; 610; 612) in der Vielzahl von DL-Sendeleistungspegeln (606; 608; 610; 612) enthalten ist;
Senden mindestens eines Referenzsignals, RS, das mit der mindestens einen Hypothese assoziiert ist, auf dem die mindestens eine Funkvorrichtung (1091; 1092; 1130) konfiguriert ist, um die CSI-Messung gemäß der gesendeten Konfigurationsnachricht durchzuführen;
Empfangen, von der mindestens einen Funkvorrichtung (1091; 1092; 1130), mindestens eines CSI-Berichts, der mit mindestens einer CSI-Messung assoziiert ist,
die in der Konfigurationsnachricht angezeigt wird; und
Senden von Daten an die mindestens eine Funkvorrichtung (1091; 1092; 1130), wobei eine Modulationskonfiguration und ein DL-Sendeleistungspegel (606; 608; 610; 612) für das Senden der Daten basierend auf dem empfangenen mindestens einen CSI-Bericht ausgewählt werden.

13. Netzwerkknoten (100; 900; 1012; 1012a; 1012b; 1012c; 1120) gemäß Anspruch 12, der ferner konfiguriert ist, um die Schritte gemäß einem der Ansprüche 2 bis 10 durchzuführen oder die Merkmale gemäß einem der Ansprüche 2 bis 10 zu beinhalten.

14. Eine Basisstation (100; 900; 1012; 1012a; 1012b; 1012c; 1120), die konfiguriert ist, um mit einem Benutzergerät, UE (1091; 1092; 1130), zu kommunizieren, wobei die Basisstation (1012; 1012a; 1012b; 1012c; 1120) eine Funkschnittstelle (902; 1127) und eine Verarbeitungsschaltung (904; 1128) beinhaltet, die konfiguriert ist, um die Schritte gemäß einem der Ansprüche 1 bis 10 auszuführen.

15. Ein Kommunikationssystem (1000; 1100), das einen Host-Rechners (1030; 1110) umfasst, der eine Verarbeitungsschaltung (1118) beinhaltet, die konfiguriert ist, um Benutzerdaten bereitzustellen, und eine Kommunikationsschnittstelle (1116) beinhaltet, die konfiguriert ist, um Benutzerdaten an ein zellulares Funknetzwerk (1011) zum Senden an ein Benutzergerät, UE (1091; 1092; 1130), weiterzuleiten;
wobei das Kommunikationssystem (1000; 1100) ferner mindestens eine Basisstation (100; 900; 1012; 1120) des zellularen Funknetzwerks (1011) umfasst, wobei die mindestens eine Basisstation (100; 900; 1012; 1012a; 1012b; 1012c; 1120) konfiguriert ist, um mit dem UE (1091; 1092; 1130) zu kommunizieren, wobei die mindestens eine Basisstation (100; 900; 1012; 1012a; 1012b; 1012c; 1120) eine Funkschnittstelle (902; 1127) und eine Verarbeitungsschaltung (904; 1128) beinhaltet, wobei die Verarbeitungsschaltung (904; 1128) der mindestens einen Basisstation (1012; 1012a; 1012b; 1012c; 1120) konfiguriert ist, um die Schritte gemäß einem der Ansprüche 1 bis 10 auszuführen, wobei das Kommunikationssystem ferner das UE (1091; 1092; 1130) umfasst,
wobei die Verarbeitungsschaltung (1118) des Host-Rechners (1030; 1110) konfiguriert ist, um eine Host-Anwendung (1112) auszuführen, wodurch die Benutzerdaten bereitgestellt werden; und
wobei die Verarbeitungsschaltung (1138) des UE (1091; 1092; 1130) konfiguriert ist, um eine Client-Anwendung (1132) auszuführen, die mit der Host-Anwendung (1112) assoziiert ist.

## Revendications

1. Un procédé (200), effectué par un nœud de réseau (100), de sélection d'un niveau de puissance d'émission de liaison descendante, DL, parmi une pluralité de niveaux de puissance d'émission DL (606 ; 608 ; 610 ; 612) pour la transmission de données à au moins un dispositif radio (1091 ; 1092 ; 1130) dans une cellule d'un réseau d'accès radio, RAN (1011), le procédé (200) comprenant les étapes :
de transmission (206) d'un message de configuration à l'au moins un dispositif radio (1091 ; 1092 ; 1130), le message de configuration étant indicatif d'au moins une mesure d'informations d'état de canal, CSI, associée à au moins une hypothèse, où l'au moins une hypothèse comprend un niveau de puissance d'émission DL (606 ; 608 ; 610 ; 612), où le niveau de puissance d'émission DL (606 ; 608 ; 610 ; 612) est compris dans la pluralité de niveaux de puissance d'émission DL (606 ; 608 ; 610 ; 612) ;
de transmission (208) d'au moins un signal de référence, RS, associé à l'au moins une hypothèse, sur lequel l'au moins un dispositif radio (1091 ; 1092 ; 1130) est configuré pour effectuer la mesure CSI selon le message de configuration transmis (206) ;
de réception (210), en provenance de l'au moins un dispositif radio (1091 ; 1092 ; 1130), d'au moins un rapport CSI associé à au moins une mesure CSI indiquée dans le message de configuration ; et
de transmission (212) de données à l'au moins un dispositif radio (1091 ; 1092 ; 1130), où une configuration de modulation et un niveau de puissance d'émission DL (606 ; 608 ; 610 ; 612) sont sélectionnés pour la transmission (212) des données sur la base de l'au moins un rapport CSI reçu (210).

2. Le procédé (200) de la revendication 1, où la configuration de modulation comprend au moins l'un parmi :
un indicateur de rang, RI ;
un schéma de modulation et de codage, MCS ; et
un indicateur de matrice de précodage, PMI.

3. Le procédé (200) de la revendication 1 ou de la revendication 2, comprenant en outre l'étape de sélection (204) de l'au moins une hypothèse parmi un ensemble d'hypothèses, où l'ensemble d'hypothèses comprend au moins deux hypothèses différentes, le procédé :
comprenant en outre l'étape de génération (202) de l'ensemble d'hypothèses, ou où chaque hypothèse au sein de l'ensemble d'hypothèses est associée à un niveau de puissance de distorsion, ou
où l'ensemble d'hypothèses est fourni dans un tableau, où le tableau comprend le niveau de puissance de distorsion.

4. Le procédé (200) de l'une quelconque des revendications 1 à 3, où l'au moins un RS comprend au moins l'un parmi un RS de puissance non nulle, NZP, facultativement un CSI-RS, et un RS de puissance nulle, ZP.

5. Le procédé (200) de la revendication 4, où l'au moins une hypothèse comprend au moins deux hypothèses avec des niveaux de puissance d'émission DL différents (606 ; 608 ; 610 ; 612) et où chaque hypothèse comprenant un niveau de puissance d'émission DL différent (606 ; 608 ; 610 ; 612) est associée à un NZP-RS différent, ou où l'au moins une hypothèse comprend au moins deux hypothèses avec des niveaux de puissance d'émission DL différents (606 ; 608 ; 610 ; 612) et où les NZP-RS associés à au moins deux des au moins deux hypothèses comprennent des ressources temporelles identiques, des ressources fréquentielles identiques, et/ou des directions de faisceau identiques, ou
où le ZP-RS est identique pour un sous-ensemble, ou la totalité, de l'au moins une hypothèse ou
où un nombre de mesures d'interférence CSI, CSI-IM, comprises dans les messages de configuration transmis (206) est égal à un nombre de l'au moins une hypothèse comprise dans le message de configuration transmis (206).

6. Le procédé (200) de l'une quelconque des revendications 1 à 5, où l'étape de transmission (206) du message de configuration est effectuée lorsque l'au moins un dispositif radio (1091 ; 1092 ; 1130) se connecte à la cellule, ou
où le procédé (200) est effectué par au moins un nœud de réseau (100 ; 900 ; 1012 ; 1012a ; 1012b ; 1012c ; 1120) desservant la cellule, ou
où le RAN (1011) comprend un premier nœud de réseau (100 ; 900 ; 1012 ; 1012a ; 1012b ; 1012c ; 1120) et au moins un deuxième nœud de réseau (900 ; 1012 ; 1012a ; 1012b ; 1012c ; 1120), où au moins l'étape de transmission (206) du message de configuration et/ou de réception (210) de l'au moins un rapport CSI est effectuée par le premier nœud de réseau (100 ; 900 ; 1012 ; 1012a ; 1012b ; 1012c ; 1120), et où les étapes de transmission (208) de l'au moins un RS et de transmission (212) de données sont effectuées par l'au moins un deuxième nœud de réseau (100 ; 900 ; 1012 ; 1012a ; 1012b ; 1012c ; 1120), ou
où l'au moins un rapport CSI reçu (210) comprend au moins un RI, au moins un PMI, et/ou au moins un indicateur de qualité de canal, CQI, ou
où le message de configuration transmis (208 ; 209), ou un message de configuration supplémentaire, est indicatif du fait que l'au moins un dispositif radio (1091 ; 1092 ; 1130) est configuré pour un rapportage CSI périodique et/ou pour un rapportage CSI apériodique.

7. Le procédé (200) de l'une quelconque des revendications 1 à 6, où le message de configuration transmis (208 ; 209), ou un message de configuration supplémentaire, est indicatif d'un rapportage uniquement sur un sous-ensemble de l'au moins une mesure CSI, le procédé comprenant en outre :
où le rapport CSI est indicatif d'une ou de plusieurs hypothèses avec les taux de transfert des données potentiels les plus élevés et/ou des taux de transfert des données potentiels dépassant un seuil prédéterminé, ou
où le rapport CSI ne prend en compte que l'au moins une hypothèse pour un CQI en dessous d'un seuil prédéterminé.

8. Le procédé (200) de l'une quelconque des revendications 1 à 7, où pour la transmission de données (212), l'hypothèse avec le débit attendu le plus élevé est appliquée,
où le débit attendu le plus élevé est déterminé sur la base d'un indicateur de qualité de canal, CQI, et/ou d'un RI compris dans l'au moins un rapport CSI reçu (210).

9. Le procédé (200) de l'une quelconque des revendications 1 à 8, où l'étape de transmission de données (212) comprend la transmission (212) de données à au moins deux dispositifs radio (1091 ; 1092 ; 1130) en utilisant le même niveau de puissance d'émission DL (606 ; 608 ; 610 ; 612).

10. Le procédé (200) de l'une quelconque des revendications 1 à 9, où le message de configuration transmis (208 ; 209), ou un message de configuration supplémentaire, est indicatif d'un ordonnancement de l'au moins un RS,
où le message de configuration transmis (206) est en outre indicatif d'au moins l'un parmi :
une périodicité de transmission (208) de l'au moins un RS ;
un décalage de transmission (208) de l'au moins un RS dans les limites d'une période ;
une fréquence de l'au moins un RS transmis (208) ; et
une configuration RS exacte.

11. Un produit programme d'ordinateur comprenant des portions de code programme pour effectuer les étapes de l'une quelconque des revendications 1 à 10 lorsque le produit programme d'ordinateur est exécuté sur un ou plusieurs dispositifs informatiques (904) d'un nœud de réseau (100), ledit produit programme d'ordinateur étant stocké sur un support d'enregistrement lisible par ordinateur (906).

12. Un nœud de réseau (100 ; 900 ; 1012 ; 1012a ; 1012b ; 1012c ; 1120) pour la sélection d'un niveau de puissance d'émission de liaison descendante, DL, parmi une pluralité de niveaux de puissance d'émission DL (606 ; 608 ; 610 ; 612) pour la transmission de données à au moins un dispositif radio (1091 ; 1092 ; 1130) dans une cellule d'un réseau d'accès radio, RAN (1011), le nœud de réseau (100 ; 900 ; 1012 ; 1012a ; 1012b ; 1012c ; 1120) étant configuré pour :
transmettre un message de configuration à l'au moins un dispositif radio (1091 ; 1092 ; 1130), le message de configuration étant indicatif d'au moins une mesure d'informations d'état de canal, CSI, associée à au moins une hypothèse, où l'au moins une hypothèse comprend un niveau de puissance d'émission DL (606 ; 608 ; 610 ; 612), où le niveau de puissance d'émission DL (606 ; 608 ; 610 ; 612) est compris dans la pluralité de niveaux de puissance d'émission DL (606 ; 608 ; 610 ; 612) ;
transmettre au moins un signal de référence, RS, associé à l'au moins une hypothèse,
sur lequel l'au moins un dispositif radio (1091 ; 1092 ; 1130) est configuré pour effectuer la mesure CSI selon le message de configuration transmis ;
recevoir, en provenance de l'au moins un dispositif radio (1091 ; 1092 ; 1130), au moins un rapport CSI associé à au moins une mesure CSI indiquée dans le message de configuration ; et
transmettre des données à l'au moins un dispositif radio (1091 ; 1092 ; 1130), où une configuration de modulation et un niveau de puissance d'émission DL (606 ; 608 ; 610 ; 612) sont sélectionnés pour la transmission des données sur la base de l'au moins un rapport CSI reçu.

13. Le nœud de réseau (100 ; 900 ; 1012 ; 1012a ; 1012b ; 1012c ; 1120) de la revendication 12, configuré en outre pour effectuer les étapes, ou comprendre les caractéristiques, de l'une quelconque des revendications 2 à 10.

14. Une station de base (100 ; 900 ; 1012 ; 1012a ; 1012b ; 1012c ; 1120) configurée pour communiquer avec un équipement utilisateur, UE (1091 ; 1092 ; 1130), la station de base (1012 ; 1012a ; 1012b ; 1012c ; 1120) comprenant une interface radio (902 ; 1127) et une circuiterie de traitement (904 ; 1128) configurée pour exécuter les étapes de l'une quelconque des revendications 1 à 10.

15. Un système de communication (1000 ; 1100) incluant un ordinateur hôte (1030 ; 1110) comprenant une circuiterie de traitement (1118) configurée pour fournir des données utilisateur et une interface de communication (1116) configurée pour transférer des données utilisateur à un réseau radio cellulaire (1011) pour transmission à un équipement utilisateur, UE (1091 ; 1092 ; 1130) ;
le système de communication (1000 ; 1100) incluant en outre au moins une station de base (100 ; 900 ; 1012 ; 1120) dudit réseau radio cellulaire (1011), l'au moins une station de base (100 ; 900 ; 1012 ; 1012a ; 1012b ; 1012c ; 1120) étant configurée pour communiquer avec l'UE (1091 ; 1092 ; 1130), où l'au moins une station de base (100 ; 900 ; 1012 ; 1012a ; 1012b ; 1012c ; 1120) comprend une interface radio (902 ; 1127) et une circuiterie de traitement (904 ; 1128), la circuiterie de traitement (904 ; 1128) de l'au moins une station de base (1012 ; 1012a ; 1012b ; 1012c ; 1120) étant configurée pour exécuter les étapes de l'une quelconque des revendications 1 à 10, le système de communication incluant en outre l'UE (1091 ; 1092 ; 1130),
où la circuiterie de traitement (1118) de l'ordinateur hôte (1030 ; 1110) est configurée pour exécuter une application hôte (1112), fournissant ainsi les données utilisateur ; et où la circuiterie de traitement (1138) de l'UE (1091 ; 1092 ; 1130) est configurée pour exécuter une application client (1132) associée à l'application hôte (1112).
